# EUROPEAN PATENT APPLICATION

(11) **EP 2 700 937 A1**
(43) Date of publication of application: **26.02.2014**
(21) Application number: 12774527.1
(22) Date of filing: 20.04.2012
(51) Int. Cl.: G01N 27/327, G01N 27/414, G01N 27/416

(54) **ELECTRODE CHIP FOR DETECTING BIOLOGICAL MOLECULE, AND METHOD FOR DETECTING BIOLOGICAL MOLECULE**

(30) Priority: 20.04.2011 JP 2011094452
(71) Applicant: National University Corporation Tokyo Medical and Dental University, Bunkyo-ku Tokyo 113-8510 (JP); National Institute for Materials Science, Tsukuba-shi, Ibaraki 305-0047 (JP)
(72) Inventor: MIYAHARA, Yuji, Tokyo 113-8510 (JP); MATSUMOTO, Akira, Tokyo 113-8510 (JP); GODA, Tatsuro, Tokyo 113-8510 (JP); MAEDA, Yasuhiro, Tokyo 113-8510 (JP); KATAOKA, Chiho, Tsukuba-shi, Ibaraki 305-0047 (JP)
(74) Representative: von Kreisler Selting Werner
(86) International application number: PCT/JP2012/060785
(87) International publication number: WO 2012/144631

(57) **Abstract**

An electrode chip for detecting a biomolecule includes a substrate; and an electrode that includes an electrode substrate, at least one of a metallic salt or a metallic oxide provided on an outermost surface on an opposite side of the electrode substrate from a side provided with the substrate, and a biomolecular probe-immobilizing material which is provided on the outermost surface and to which a biomolecular probe is fixed.

## Description

### Technical Field

The present invention relates to an electrode chip for detecting a biomolecule and a method for detecting a biomolecule.

### Background Art

In recent years, a rapid progress has been made in genome sequencing of a variety of living things including human genome, and a large amount of information on base sequences is being gathered. By clarifying functions of genes in a living body, a dramatic development of gene-related technologies can be expected in a wide range of fields, such as the diagnosis of a variety of diseases, the development of pharmaceuticals, and the breed improvement of agricultural products. In the development of gene-related technologies, it is important to accurately analyze the information on base sequences and the information on expressions and functions of genes.

Technologies to carry out the analysis of the functions and expressions of genes in large-scale, and to advance the analysis into genetic test have already been commercially available as DNA chips or DNA microarrays. However, a majority of existing DNA chips and DNA microarrays employ fluorescent detection in which biomolecules are optically detected using labeled molecules, such as fluorescent substances, as a basic principle, and therefore it is necessary to use laser or complicated optical systems, which makes systems larger and expensive.

In order to solve the above problem, there is a report regarding electric current-detector DNA chips in which a redox label is used. For example, a method is known in which one end of a molecule called a molecular wire is immobilized on a metal electrode, a DNA probe is bound to the other end of the molecule, and electron transfer between the redox label and the metal electrode based on hybridization with a target gene is detected as a change in electric current, thereby detecting the target gene (for example, refer to Nature Biotechnology, Vol. 16 (1998), pages 27 and 40).

In addition, in the field of medical diagnosis, that is, the field of genetic diagnosis, high accuracy and high quantitativity are required. In order to deal with the requirements, for example, a method is disclosed in which a DNA probe is immobilized on a surface of a floating electrode connected to a gate electrode in a field-effect transistor, hybridization is carried out with target genes on the surface of the floating electrode, and a change of a surface charge density caused at this time is detected using a field effect (for example, refer to Japanese Patent Application Laid-Open (JP-A) No. 2005-077210).

### SUMMARY OF INVENTION

### Technical Problem

However, in the method described on pages 27 and 40 of Nature Biotechnology, Vol. 16 (1998), a redox reaction on a metal electrode is used as a basic principle of detection. Therefore, the presence of an oxidizing substance or a reducing substance (for example, ascorbic acid), if any, in a specimen causes an electric current to flow due to oxidization or reduction; as a result of which there were cases in which the electric current interfered with the detection of genes and deteriorated the detection accuracy. In addition, the measurement of an electric current is often accompanied by progression of an electrode reaction on the metal electrode. Furthermore, since the electrode reaction is an irreversible and non-equilibrium reaction, corrosion of the electrode, generation of gases, or the like may occur, which may deteriorate the stability of the measurement of the electric current; in particular, there were cases in which the detection accuracy deteriorated in the case of repetitive measurements,.

Although the method described in JP-A No. 2005-077210 is a low-cost detection method with a high accuracy compared with the biomolecule detection method using a redox reaction, a stable potential cannot be easily obtained, and there has been a demand for a higher level of accuracy.

In consideration of the above circumstances, there are needs for an electrode chip for detecting a biomolecule which has excellent stability of the electric potential at the solid-liquid interface between a liquid and an electrode, and a method for detecting a biomolecule whereby a biomolecule is detected with high accuracy.

### Means for Solving the Problems

Specific means for achieving the above object are as described below.
<1> An electrode chip for detecting a biomolecule, including:
   a substrate; and
   an electrode that includes an electrode substrate, at least one of a metallic salt or a metallic oxide provided on an outermost surface on an opposite side of the electrode substrate from a side provided with the substrate, and a biomolecular probe-immobilizing material provided on the outermost surface, wherein a biomolecular probe is immobilized to the biomolecular probe-immobilizing material.
<2> The electrode chip for detecting a biomolecule according to the above <1>, wherein the metallic salt is a metallic chloride.
<3> The electrode chip for detecting a biomolecule according to the above <1> or <2>, wherein a metal included in the metallic salt is silver.
<4> The electrode chip for detecting a biomolecule according to the above <1>, wherein a metal included in the metallic oxide is tantalum.
<5> The electrode chip for detecting a biomolecule according to any one of the above <1> to <4>, wherein the biomolecular probe is a nucleic acid, a polynucleotide, a synthetic oligonucleotide, an antibody or an antigen.
<6> A method for detecting a biomolecule, including:
   an aqueous solution contact step of bringing an electrode chip for detecting a biomolecule into contact with an aqueous solution containing at least one kind of biomolecule, the electrode chip for detecting a biomolecule including:
      a substrate; and
      an electrode that includes an electrode substrate, at least one of a metallic salt or a metallic oxide provided on an outermost surface on an opposite side of the electrode substrate from a side provided with the substrate, and a biomolecular probe-immobilizing material provided on the outermost surface, wherein a biomolecular probe is immobilized to the biomolecular probe-immobilizing material; and
      a detection step of detecting a change in a solid-liquid interface potential of the electrode.
<7> The method for detecting a biomolecule according to the above <6>, wherein the metallic salt is a metallic chloride.
<8> The method for detecting a biomolecule according to the above <6> or <7>, wherein a metal that forms the metallic salt is silver.
<9> The method for detecting a biomolecule according to the above <6>, wherein a metal that forms the metallic oxide is tantalum.
<10> The method for detecting a biomolecule according to any one of the above <6> to <9> in which the biomolecular probe is a nucleic acid, a polynucleotide, a synthetic oligonucleotide, an antibody or an antigen.
<11> The method for detecting a biomolecule according to any one of the above <6> to <10>, wherein the aqueous solution contact step is a step of forming a complementary complex of the biomolecular probe and a nucleic acid that is the biomolecule in the aqueous solution, using a single-strand nucleic acid as the biomolecular probe, or a step of forming an antigen-antibody reaction.

### Advantageous Effects of Invention

According to the invention, it is possible to provide an electrode chip for detecting a biomolecule which has excellent stability of the electric potential at the solid-liquid interface between a liquid and an electrode, and a method for detecting a biomolecule whereby a biomolecule is detected with high accuracy.

### BRIEF DESCRIPTION OF DRAWINGS

Fig. 1 is a schematic cross-sectional view illustrating an example of the configuration of an electrode chip for detecting a biomolecule of the invention.
Fig. 2A is a top schematic view illustrating an example of the configuration of a laminated body of a substrate and an electrode substrate, and Fig. 2B is a side schematic view illustrating the example of the configuration of the laminated body of a substrate and an electrode substrate.
Fig. 3A is a top schematic view illustrating another example of the configuration of a laminated body of a substrate and an electrode substrate, and Fig. 3B is a side schematic view illustrating the another example of the configuration of the laminated body of a substrate and an electrode substrate.
Fig. 4A is a side schematic view illustrating an example of the configuration of a transistor, and Fig. 4B is a top schematic view illustrating the example of the configuration of the transistor.
Fig. 5A is a side schematic view illustrating an example of the configuration of the transistor, and Fig. 5B is a top schematic view illustrating the example of the configuration of the transistor.
Fig. 6 is a schematic view illustrating an example of the configuration of a measurement system in a method for detecting a biomolecule of the invention.
Fig. 7 is a schematic view of a single base extension reaction of a nucleic acid in the method for detecting a biomolecule of the invention.
Fig. 8 is a schematic cross-sectional view illustrating a layer configuration of a SAM laminated body used in examples.
Fig. 9 is an AFM photograph of a surface of an electrode substrate used in a comparative example.
Fig. 10 is an AFM photograph of a surface of an electrode substrate used in an example.
Fig. 11 is an AFM photograph of a surface of an electrode substrate used in an example.
Fig. 12 is an AFM photograph of a surface of an electrode substrate used in an example.
Fig. 13 is an AFM photograph of a surface of an electrode substrate used in an example.
Fig. 14 is a graph illustrating CV curves of SAM laminated bodies used in an example.
Fig. 15 is a graph illustrating XPS spectrums of SAM laminated bodies used in examples and a comparative example.
Fig. 16 is a graph illustrating XPS spectrums of SAM laminated bodies used in examples.
Fig. 17 is a table describing the proportions of detected atoms obtained from XPS spectra of SAM laminated bodies used in examples and a comparative example.
Fig. 18 is a graph illustrating changes in the surface potentials of surfaces of the electrode substrates of SAM laminated bodies used in a comparative example over time.
Fig. 19 is a graph illustrating changes in the surface potentials of surfaces of the electrode substrates of SAM laminated bodies used in an example over time.
Fig. 20 is a graph illustrating the electric potential stability of the surface potentials of SAM laminated bodies used in an example and a comparative example.
Fig. 21A is an AFM photograph of a surface of an electrode substrate used in an example, and Fig. 21B is a curve illustrating an uneven state of the surface of the electrode substrate used in the example.
Fig. 22 is a graph illustrating the electric potential stability of the surface potential of an electrode substrate used in an example.
Fig. 23 is a graph illustrating the electric potential stability of the surface potentials of electrode substrates used in examples.
Fig. 24 is a schematic cross-sectional view illustrating another example of the configuration of the electrode chip for detecting a biomolecule of the invention.
Fig. 25 is a graph illustrating surface potential differences of an electrode substrate used in a reference example.
Fig. 26 is a graph illustrating surface potential differences of electrode substrates used in the reference example.
Fig. 27 is a graph illustrating surface potential differences of an electrode substrate used in the reference example.
Fig. 28 is an epi-fluorescent microscopic image of an electrode substrate used in a reference example.
Fig. 29 is an epi-fluorescent microscopic image of an electrode substrate used in a reference example.
Fig. 30 is an epi-fluorescent microscopic image of an electrode substrate used in a reference example.
Fig. 31 is a graph illustrating a change in surface potential over time of an electrode substrate used in an example.
Fig. 32 is a bar graph illustrating surface potentials of electrode substrates used in examples.

### DESCRIPTION OF EMBODIMENTS

An electrode chip for detecting a biomolecule of the invention includes: a substrate; and an electrode that includes an electrode substrate, at least one of a metallic salt or a metallic oxide provided on an outermost surface on an opposite side of the electrode substrate from a side provided with the substrate, and a biomolecular probe-immobilizing material which is provided on the outermost surface and to which a biomolecular probe is immobilized.

This configuration of an electrode chip for detecting a biomolecule allows the electrode chip for detecting a biomolecule to have excellent stability of an electric potential at a solid-liquid interface (also referred to as "solid/liquid interface") between a liquid and an electrode.

Regarding detection of a biomolecule, quantitative detection of the presence of the biomolecule based on the sensing of the concentration of the biomolecule in a liquid as an electric signal is known. For example, it is known that, when an electrode to which a biomolecular probe for capturing a target biomolecule is immobilized is immersed in a solution including the biomolecule, the biomolecular probe captures the biomolecule, and the electric signal of the captured biomolecule is sensed by the electrode. As a method for sensing the electric signal, an electric current method in which the presence of the biomolecule is sensed based on a change in an electric current and an electric potential method in which the presence of the biomolecule is sensed based on a change in an electric potential are known.

As the electric current method, for example, utilization of a redox reaction on a metal electrode is known. However, there were cases in which presence of an oxidizing substance or a reducing substance (for example, ascorbic acid), if any, in a solution including the biomolecule causes an electric current due to oxidization or reduction to flow, which hinders the detection of the biomolecule and deteriorates the detection accuracy. In addition, the measurement of the electric current is accompanied by progression of an electrode reaction on the metal electrode. Since the electrode reaction is an irreversible and non-equilibrium reaction, there were cases in which corrosion of the metallic electrode, generation of gas, or the like occurred, the stability of the measurement of the electric current was impaired, and, particularly in the case of repeated measurements, the detection accuracy was deteriorated.

Meanwhile, as the electric potential method, the detection of a change in the electric potential at a solid-liquid interface between an electrode and a liquid (a change in the surface charge density) caused by a charged biomolecule captured by the biomolecular probe is known. According to a method described in JP-A No. 2005-077210, detection of the change in electric potential by a transistor using a field effect is known. However, when a transistor is used, facilities for manufacturing semiconductors are required, and it becomes difficult to meet a desire for cost reduction.

Furthermore, a metal is generally used as the electrode material, and gold was used in the past due to its resistance against corrosion by a solution. However, gold causes polarization, and, therefore, the electric potential at the solid-liquid interface does not stabilize; therefore, a change in the electric potential based on the presence of a biomolecule could not be accurately detected. The destabilization of electric potential (also called "potential drift") is also caused by an increase or decrease in the concentration of ions in a solution in which the electrode is immersed.

Therefore, we suppose that, in order to accurately detect the change in the electric potential caused by the presence of a biomolecule, the potential drift should be suppressed. That is, we suppose that, by using an electrode material that does not easily cause polarization, and putting the electrode into an environment in which the concentration of ions in a solution does not easily increase or decrease, the electric potential at the solid-liquid interface between the electrode and the liquid is stabilized and the occurrence of the potential drift is suppressed.

Here, the electrode chip for detecting a biomolecule according to the invention includes a substrate; and an electrode that includes an electrode substrate, at least one of a metallic salt or a metallic oxide provided on an outermost surface on an opposite side of the electrode substrate from a side provided with the substrate, and a biomolecular probe-fixing material which is provided on the outermost surface and to which a biomolecular probe is immobilized. That is, the electrode chip includes at least one of a metallic salt or a metallic oxide as the electrode material.

When the metallic salt is represented by MX, the metallic salt dissociates into a metallic ion (M⁺) and a salt ion (X⁻) in an aqueous solution, and forms an equilibrium state as illustrated in the following formula (1).

MX ⇄ M⁺+X⁻ Formula (1)

In addition, it is thought that the metallic oxide also dissociates in an aqueous solution and forms an equilibrium state. That is, when the metallic oxide is represented by MO, the metallic oxide MO⁻ forms an equilibrium state with a hydroxide (MOH), and, furthermore, turns into MOH₂⁺ depending on the property (pH) of the aqueous solution. It is thought that Mo⁻, MOH and MOH₂⁺ turn into an equilibrium state as illustrated in the following formula (2).

MO⁻ ⇄ MOH ⇄ MOH₂⁺ Formula (2)

Therefore, we suppose that, when the electrode chip for detecting a biomolecule according to the invention is immersed in an aqueous solution including X- ions in a case in which the electrode chip contains the metallic salt or immersed in an aqueous solution including H⁺ ions in a case in which the electrode chip contains the metallic oxide, the ions form an equilibrium state, and the electric potential at the solid-liquid interface between the electrode and the solution becomes stable. That is, we suppose that the potential drift does not easily occur. In addition, unlike gold, the metallic salt and the metallic oxide which serve as the electrode material do not cause polarization; we suppose that the potential drift does not easily occur, also from this viewpoint.

We suppose that the electrode chip for detecting a biomolecule of the invention is excellent in terms of the stability of the electric potential at the solid-liquid interface between a liquid and the electrode for the reasons discussed above.

Furthermore, we suppose that a change in the electric potential due to the presence of a biomolecule can be more accurately detected, and thus the biomolecule can be detected with high accuracy, by bringing the electrode chip for detecting a biomolecule of the invention, which has excellent stability of the electric potential at the solid-liquid interface between a liquid and the electrode, into contact with an aqueous solution containing at least one kind of biomolecule (for example, immersing the chip in the aqueous solution), and detecting a change in the electric potential of the electrode at the solid-liquid interface.

Hereinafter, the electrode chip for detecting a biomolecule and a method for detecting a biomolecule of the invention will be described in detail.

### <Electrode Chip for Detecting Biomolecule>

The electrode chip for detecting a biomolecule of the invention includes: a substrate; and an electrode that includes an electrode substrate, at least one of a metallic salt or a metallic oxide provided on an outermost surface on an opposite side of the electrode substrate from a side provided with the substrate, and a biomolecular probe-fixing material which is provided on the outermost surface and to which a biomolecular probe is immobilized.

The electrode chip for detecting a biomolecule may further include one or more intermediate layers between the substrate and the electrode.

Since the electrode chip for detecting a biomolecule includes at least one of a metallic salt or a metallic oxide on the outermost surface of the electrode, the at least one of a metallic salt or a metallic oxide comes into contact with an aqueous solution containing a biomolecule when the electrode chip for detecting a biomolecule is immersed in the aqueous solution. As a result, the metallic salt or the metallic oxide dissociates, and ions in the aqueous solution form an equilibrium state, as a result of which the electric potential at the interface between the electrode and the aqueous solution can be stabilized.

In addition, since the electrode chip for detecting a biomolecule includes a biomolecular probe-fixing material to which a biomolecular probe is immobilized and which is provided on the outermost surface of the electrode, the biomolecular probe comes into contact with an aqueous solution containing a biomolecule when the electrode chip for detecting a biomolecule is immersed in the aqueous solution. As a result, the biomolecular probe captures the biomolecule in the aqueous solution, and a change in the electric potential caused by a charge of the biomolecule can be detected.

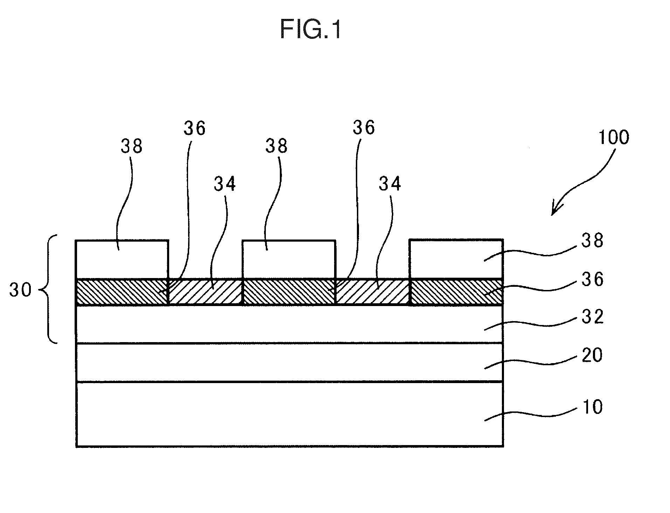

An example of the configuration of the electrode chip for detecting a biomolecule of the invention will be described using Fig. 1.

Fig. 1 illustrates electrode chip 100 for detecting a biomolecule including substrate 10, intermediate layer 20 that is located on substrate 10 and adjacent to substrate 10, and electrode 30 that is located on intermediate layer 20 and adjacent to intermediate layer 20. Electrode 30 includes metal electrode substrate 32, and inorganic layer 34 formed of at least one of a metallic salt or a metallic oxide wherein electrode substrate 32 serves as a metallic element, and biomolecular probe-fixing layer 36 formed using a bimolecular probe-fixing material, are formed on the outermost surface of electrode 30. Since electrode substrate 32 is covered with inorganic layer 34 and biomolecular probe-fixing layer 36, electrode substrate 32 is not exposed. In addition, biomolecular probe 38 is immobilized on biomolecular probe-fixing layer 36.

The amount of change in the electric potential detected when the electrode chip 100 for detecting a biomolecule is immersed in an aqueous solution containing a biomolecule can be measured using an electric potential measuring device (not shown in the drawing) connected to electrode substrate 32 through a lead wire or the like.

Hereinafter, explanations will be given in which the reference numbers are omitted.

### [Electrode]

### (Metallic Salt and Metallic Oxide)

The electrode includes at least one of a metallic salt or a metallic oxide provided on the outermost surface on an opposite side of the electrode substrate from a side provided with the substrate.

That is, the electrode may include, on the outermost surface, an electrode substrate having only a metallic salt, include an electrode substrate having only a metallic oxide, or include an electrode substrate having both a metallic salt and a metallic oxide.

The metallic salt is not particularly limited, and examples thereof include silver chloride, calcium chloride, barium chloride, magnesium chloride, zinc chloride, aluminum chloride, calcium nitrate, aluminum nitrate, silver sulfate, silver bromide, silver iodide, platinum chloride and the like. The metallic salt may be used singly, or in combination of two or more thereof.

Among the above, the metallic salt is preferably a metallic chloride since an aqueous solution containing a biomolecule, such as serum, includes a number of chloride ions. In addition, a metal that forms the metallic salt is preferably a metal having a good affinity to a biomolecular probe-immobilizing material described below. In a case in which, for example, an alkanethiol is used as the biomolecular probe-immobilizing material, the metal that forms the metallic salt is preferably a metal having a good affinity to sulfur atoms, specifically, preferably silver, platinum or zinc, and more preferably silver.

The metallic oxide is not particularly limited, and examples thereof include tantalum oxide (Ta₂O₅), titanium oxide (TiO₂), aluminum oxide (Al₂O₃), magnesium oxide (MgO₂), zinc oxide (ZnO₂), silicon oxide, tin oxide, platinum oxide, and gold oxide. The metallic oxide may be used singly or in combination of two or more thereof.

Among the above, a metal that forms the metallic salt is preferably a metal having a high affinity for the biomolecular probe-immobilizing material described below. In a case in which, for example, an alkanethiol is used as the biomolecular probe-immobilizing material, the metal that forms the metallic salt is preferably a metal having a high affinity for sulfur atoms, specifically, preferably tantalum (Ta), platinum, gold or titanium, and more preferably tantalum.

The electrode substrate including a metallic salt or a metallic oxide may be an inorganic material such as glass, metal or indium tin oxide (ITO), or an organic material such as a polyester or a polyolefin.

In a case in which the inorganic layer formed of a metallic salt or a metallic oxide is formed using a surface treatment described below, the electrode substrate is preferably made of a metal, and the electrode substrate is more preferably made of the metal that forms the metallic salt or the metal that forms the metallic oxide.

In a case in which the electrode substrate is made of a metal, it is preferable that the surface of the electrode substrate is covered with the inorganic layer including at least one of a metallic salt or a metallic oxide and the biomolecular probe-immobilizing layer formed of a biomolecular probe-immobilizing material, and is not exposed, from the viewpoint of the stability of the electric potential of the solid-liquid interface between an aqueous solution containing a biomolecule and the electrode.

The metallic salt or the metallic oxide may be present on the electrode substrate, and may be present as an inorganic layer which is formed of the metallic salt or the metallic oxide, and which is disposed on a surface of the electrode substrate. Examples of a method for forming the inorganic layer formed of a metallic salt or a metallic oxide on a surface of the electrode substrate include a method in which a separately-prepared metallic salt or metallic oxide is adhered to the electrode substrate, a method in which a surface of the electrode substrate made of metal is surface-treated using a chemical reaction, and the like.

Examples of a method for adhering the separately-prepared metallic salt or metallic oxide to the substrate include a method in which an adhesive such as an epoxy compound is applied to the electrode substrate or to the metallic salt or metallic oxide, and then the electrode substrate and the metallic salt or metallic oxide are adhered to each other, a method in which the metallic salt or metallic oxide is vapor-deposited on the electrode substrate using electron beams or the like, and a method in which the metallic salt or metallic oxide is formed on the substrate using sputtering.

For example, in order to form a metallic oxide layer formed of a tantalum oxide on ITO as the electrode substrate, the tantalum oxide may be vapor-deposited on a surface of the ITO. The layer thickness of the tantalum oxide layer can be controlled by adjusting the deposition time.

Examples of a method for surface-treating a surface of the electrode substrate made of metal using a chemical reaction include a method in which a liquid such as a chelating agent solution containing chloric acid, nitric acid or a salt ion, or a gas such as an oxygen gas or an ozone gas is applied to the surface of the electrode substrate made of metal.

The formation of an inorganic layer formed of a metallic salt on a surface of the electrode substrate made of metal can be achieved by surface-treating the surface of the electrode substrate made of metal with a solution or the like with which a desired metallic salt can be formed. For example, in order to form a layer formed of silver chloride on a surface of a silver plate, a chelating solution in which sodium chloride is dissolved with a chelating agent containing Fe³⁺ as a ligand (for example, PDTA; 1,3-propandiamine tetraacetic acid) may be applied to the surface of the silver plate. The layer thickness of a silver chloride layer as the inorganic layer can be controlled by adjusting the concentration of sodium chloride in the chelating solution or by adjusting the duration of the contact between the chelating solution and the silver plate.

In order to form an inorganic layer formed of a metallic oxide on a surface of the electrode substrate made of metal, the surface of the electrode substrate made of metal may be oxidized. For example, the electrode substrate may be oxidized by applying a solution containing an oxidant such as hydrogen peroxide to the surface of the electrode substrate made of metal, or blowing oxygen gas, ozone gas or the like to the surface of the electrode substrate.

Among the above, the method in which a surface of the electrode substrate made of metal is treated using a chemical reaction is preferably used as the method for forming an inorganic layer formed of a metallic salt on an electrode substrate. The method for forming an inorganic layer formed of a metallic salt on an electrode substrate may alternatively be vapor-deposition of the metallic oxide on a surface of the electrode substrate made of metal.

The layer thickness of the inorganic layer including a metallic salt or a metallic oxide is preferably from 1 nm to 100 nm, and more preferably from 1 nm to 10 nm.

The presence of the inorganic layer formed of a metallic salt or a metallic oxide on the electrode substrate can be confirmed by, for example, observing a photograph of the surface of the electrode substrate using an atomic force microscope (AFM), a transmission electron microscope (TEM) or the like.

### (Biomolecular probe and biomolecular probe-immobilizing material)

The electrode includes a biomolecular probe-immobilizing material which is provided on the outermost surface of the electrode substrate, and to which a biomolecular probe is immobilized.

Examples of the biomolecular probe include a nucleic acid, a polynucleotide, a synthetic oligonucleotide, an antibody and an antigen, each of which may be a fragment or the like. For example, an oligonucleotide, a cDNA fragment or the like is usually composed of 300 or fewer bases. In a case in which an oligonucleotide is used, the oligonucleotide is preferably a nucleic acid fragment having a length of 80 bases or fewer.

One end of the biomolecular probe is bound (immobilized) to the biomolecular probe-immobilizing material, and the biomolecular probe specifically bind to or reacts with a biomolecule in an aqueous solution containing the biomolecule. In addition, a specific biomolecule can be accurately detected by allowing a single strand probe (for example, single strand DNA) as the biomolecular probe to complementarily bind to a target DNA, and then using a single base elongation which complementarily react with a base of the target DNA. The details of the method for detecting a biomolecule will be described below.

The biomolecular probe-immobilizing material is a material for immobilizing the biomolecular probe to the electrode. In order for the electrode to accurately detect the charge of a biomolecule, binding (immobilizing) of the biomolecular probe capable of capturing the biomolecule to the electrode substrate is important.

Examples of the biomolecular probe-immobilizing material include sulfur-containing compounds, silyl group-containing compounds, streptavidin (hereinafter, also referred to simply as "avidin"), and the like.

Examples of the sulfur-containing compounds include alkanethiols, alkandisulfides and the like, all of which include an alkyl chain. Examples of the silyl group-containing compounds include alkylalkoxysilane including an alkyl chain, and the like.

Both the sulfur-containing compounds and the silyl group-containing compounds may be sulfur-containing compounds or silyl group-containing compounds which include a polymer chain typified by polyethylene glycol (PEG) instead of an alkyl chain.

Sulfur has a high affinity to a noble metal such as gold, silver or platinum. When a metallic salt is present on the outermost surface of the electrode, the salt ion of the metallic salt (Cl⁻ in the case of AgCl) is exposed on the outermost surface of the electrode, and, when a metallic oxide is present on the outermost surface of the electrode, the oxygen ion (O⁻) of the metallic oxide is exposed on the outermost surface of the electrode. In such circumstances, when a thiol group-containing compound is allowed to react with the metallic salt or the metallic oxide on the electrode, the salt ion (for example, Cl⁻) is substituted by sulfur in a case in which a metallic salt is present on the outermost surface of the electrode, or the oxygen ion (O⁻) is substituted by sulfur in a case in which a metallic oxide is present on the outermost surface of the electrode, whereby the metal and the sulfur are bonded to each other.

A silyl group (Si) has a high affinity for oxygen ions. When an oxide such as glass or a metallic oxide is present on the outermost surface of the electrode, the oxygen ions (O⁻) in the metallic oxide are exposed on the outermost surface of the electrode. In such circumstances, when a silyl group-containing compound is allowed to react with the oxide on the electrode, oxygen ions (O⁻) and sulfur atoms are bonded.

In a case in which the surface of the metallic electrode is first reacted with a thiol group-containing compound, sulfur is bonded to the metal surface so that the thiol group-containing compound is fixed. Thereafter, when the electrode surface is brought into contact with, for example, a reaction solution such as PDTA, a metallic salt such as silver chloride is formed on a region of the surface of the metal electrode on which the thiol group-containing compound is not formed. The adjustment of the concentration of the thiol group-containing compound allows adjustment of the density of sulfur atoms bonded to the metal surface, that is, the density of the thiol group-containing compound can be adjusted, and enables control and alteration of the proportions of the area of the metallic salt and the area to which the thiol group-containing compound is fixed on the surface of the electrode. In the above method, the thickness of the layer of the metallic salt (silver chloride) can be controlled by adjusting the duration of contact with the reaction solution such as PDTA; further, the relative positions of and the distance between a functional group (an amino group, a carboxylic group, an aldehyde group or the like) in the thiol group-containing compound and the surface of the metallic salt and the flexibility of the thiol group-containing compound can be controlled and optimized by adjusting the size of the thiol-containing compound, for example, the length of the alkyl group.

Avidin may be immobilized to the electrode by modifying a part of the molecule using a sulfur-containing compound such as an alkanethiol or a silyl group-containing compound such as an alkylalkoxysilane.

Meanwhile, the binding (immobilizing) between the biomolecular probe-immobilizing material and the biomolecular probe may be achieved by, for example, modifying either of one end of the biomolecular probe or one end of the biomolecular probe-immobilizing material with an amino group, modifying the other of the one end of the biomolecular probe or the one end of the biomolecular probe-immobilizing material with a carboxy group, and binding the biomolecular probe-immobilizing material and the biomolecular probe via an amide bond or the like. In a case in which an amino group or a carboxy group is already included in the molecule, the modification with an amino group or a carboxy group need not be carried out. In addition, the one end may be modified with an aldehyde group instead of a carboxy group, and allowed to bind to an amino group.

In a case in which the biomolecular probe-immobilizing material is avidin, it is possible to use biotin having a high affinity for avidin. Since avidin is composed of four subunits, each of which has a biotin-biding site, one molecule thereof can bind to four biotin molecules. Therefore, modification of one end of the biomolecular probe with biotin enables binding (immobilization) of the biomolecular probe to the biomolecular probe-immobilizing material via avidin-biotin binding.

Among the above, the biomolecular probe-immobilizing material is preferably a sulfur-containing compound.

The sulfur-containing compound functions as a self-assembled membrane (SAM). The self-assembled membrane (SAM) refers to a thin film having a structure having a certain degree of order that is formed through an intrinsic mechanism of the film material in a state in which no minute control is applied from the outside. The self-assembly forms a structure or pattern having order over a long distance in a non-equilibrium state. Sulfur-containing oxides such as alkanethiols or alkanedisulfides are voluntarily adsorbed to a noble metal-containing substrate including a noble metal such as gold or silver, a metallic salt made of a noble metal or an oxide made of a noble metal, and provide a monomolecular-sized thin film. Therefore, the biomolecular probe can be immobilized to the electrode at a high density, and the accuracy of the detection of the biomolecule can be further increased.

Meanwhile, a target gene that is a detection target biomolecule is detected using hybridization with the biomolecular probe (for example, a DNA probe). On this occasion, if molecules are present excessively densely in a region surrounding the biomolecule, there are cases in which the biomolecule is not easily adsorbed to the biomolecular probe due to structural hindrance. Biomolecular probe-immobilizing materials having a hydrophobic group such as the alkanethiol described above tend to gather due to the hydrophobic chain interaction between the alkyl groups thereof, and tend to form a domain. Since biomolecules such as proteins have a feature of being easily adsorbed to hydrophobic surfaces, there is a tendency for biomolecules to gather and exist excessively densely.

Therefore, a component having a hydrophilic group (hydrophilic component) such as sulfobetaine (SB) may be used in mixture with a biomolecular probe-immobilizing material having a hydrophilic group. Since sulfobetaine is a highly hydrophilic molecule having both a positive charge and a negative charge, formation of a SAM by mixing sulfobetaine with a hydrophobic molecule such as an alkanethiol enables adjustment of the hydrophobicity and hyrophilicity of the surface of the SAM. As a result, the structural hindrance around the biomolecule can be suppressed. Specific examples of SB include sulfobetaine 3-undecanethiol.

The hydrophobicity and hyrophilicity of the surface of the SAM can be adjusted by altering the mixing ratio between the hydrophilic component and the biomolecular probe-immobilizing material having a hydrophobic group.

The molar ratio of DNA probe and sulfobetaine (SB) [DNA probe: SB] is preferably in a range of from 1:1 to 1:10. In order to obtain a high hybridization efficiency, the molar ratio is more preferably 1:1. With a molar ratio of 1:1, the density of the DNA probe on the surface of the electrode is 0.04 probe molecules/(nm)², that is, 0.04 DNA probe molecules are present in a square nanometer. In this case, the distance between adjacent DNA probe molecules is approximately 5 nm. Considering that the diameter of a double-strand DNA is 2 nm, the distance described above is considered appropriate as a distance between probe molecules. In order to achieve a hybridization efficiency of 100%, the density of DNA probe molecules is desirably 0.1 probe molecules/(nm)² or lower.

In a case in which it is desired to form a biomolecular probe-immobilizing layer formed of a biomolecular probe-immobilizing material in the electrode, a biomolecular probe-immobilizing material solution in which the biomolecular probe-immobilizing material is dissolved may be applied directly to the electrode substrate or to the layer formed of a metallic salt or a metallic oxide, followed by drying.

The biomolecular probe may be bound to the biomolecular probe-immobilizing material after the biomolecular probe-immobilizing layer is formed. Alternatively, the biomolecular probe may be bound to the biomolecular probe-immobilizing material in advance, then the biomolecular probe-bound biomolecular probe-immobilizing material may be dissolved in a solvent to form a solution, and the solution may be applied to the electrode substrate or to the layer formed of a metallic salt or a metallic oxide.

Examples of a method for applying the solution to the electrode substrate or the inorganic layer formed of a metallic salt or a metallic oxide include a method in which the solution is applied by coating, such as spin coating, air knife coating, bar coating, blade coating, slide coating or curtain coating, and a method in which the solution is applied using a dropwise addition method, a spray method, a vapor deposition method, a cast method, an immersion method or the like.

The solution in which the biomolecular probe-immobilizing material or the biomolecular probe-bound biomolecular probe-immobilizing material is dissolved may be applied in a random shape, or applied such that the solution is aligned in an array shape, or applied as a lump in a domain shape, to the electrode substrate or the layer formed of a metallic salt or a metallic oxide. In addition, the solution may be applied in a pattern.

As a solvent that dissolves the biomolecular probe-immobilizing material or the biomolecular probe-bound biomolecular probe-immobilizing material, water, an alcohol or a mixed solvent thereof is used. In a case in which only the biomolecular probe-immobilizing material is dissolved, a water-insoluble organic solvent may be used; however, in a case in which the biomolecular probe-bound biomolecular probe-immobilizing material is dissolved, water, a water-soluble solvent such as an alcohol, or a mixed solvent thereof is used from the viewpoint of the handling of the biomolecule. Among the above, water, ethanol, or a mixed solvent thereof is preferable.

Immobilization of the biomolecular probe to the electrode can be achieved in the manner described above. The use of a solution in which the biomolecular probe-immobilizing material or the biomolecular probe-immobilizing material to which a biomolecular probe is bound is dissolved enables the biomolecular probe to be immobilized in a variety of shapes such as a pattern shape and an array shape. Fig. 1 illustrates a state in which inorganic layer 34 and biomolecule-immobilizing layer 36 are formed in domain shapes. In Fig. 1, for example, in a case in which the molecules forming biomolecule-immobilizing layer 36 are hydrophobic such as an alkyl chain of an alkanethiol, since the molecules aggregate in a domain shape due to self-assembly which is caused by a hydrophobic interaction between molecules as a driving force, the shape as illustrated in Fig. 1 is formed. A pattern structure such as that illustrated in Fig. 1 can alternatively be formed artificially using lithography techniques. On the other hand, in a case in which the molecules forming biomolecule-immobilizing layer 36 are hydrophilic such as polyethylene glycol, since the molecules do not aggregate, inorganic layer 34 and biomolecule-immobilizing layer 36 can be randomly mixed. These techniques are effective in terms of control of the distance between biomolecular molecules or the reaction efficiency in the case of immobilizing biomolecules 38 to the surface of biomolecule-immobilizing layer 36. The a domain-shaped arrangement such as that illustrated in Fig. 1 or a random arrangement is preferably selected depending on the size of the biomolecules and the reaction manner.

In a case in which immobilization of the biomolecular probe in a pattern, in an array shape or the like is desired, the electrode substrate may be shaped to a desired shape in advance, and the solution in which the biomolecular probe-immobilizing material or the biomolecular probe-immobilizing material to which a biomolecular probe is bound is dissolved may be applied to the electrode substrate having the desired shape.

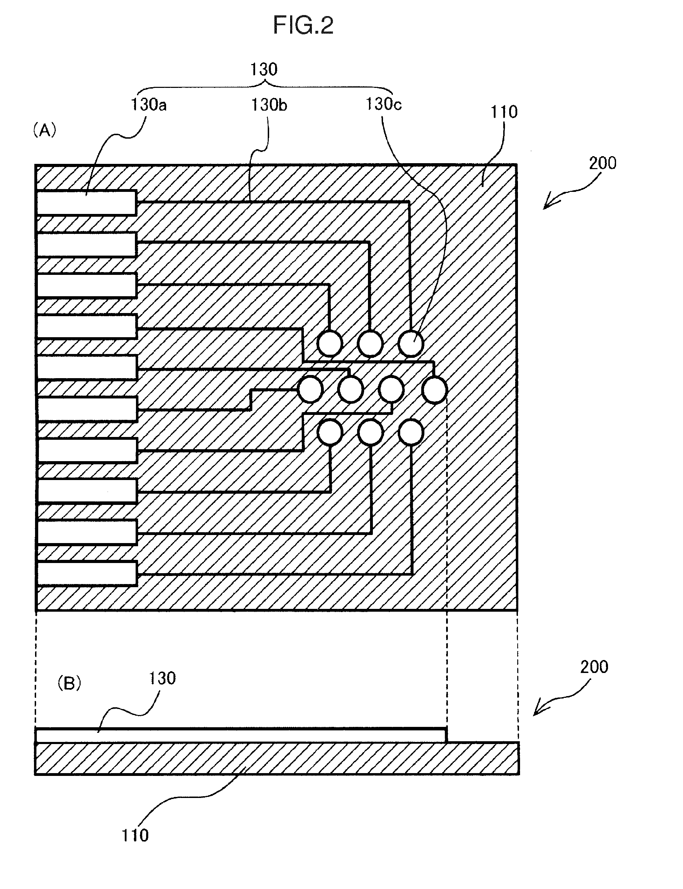

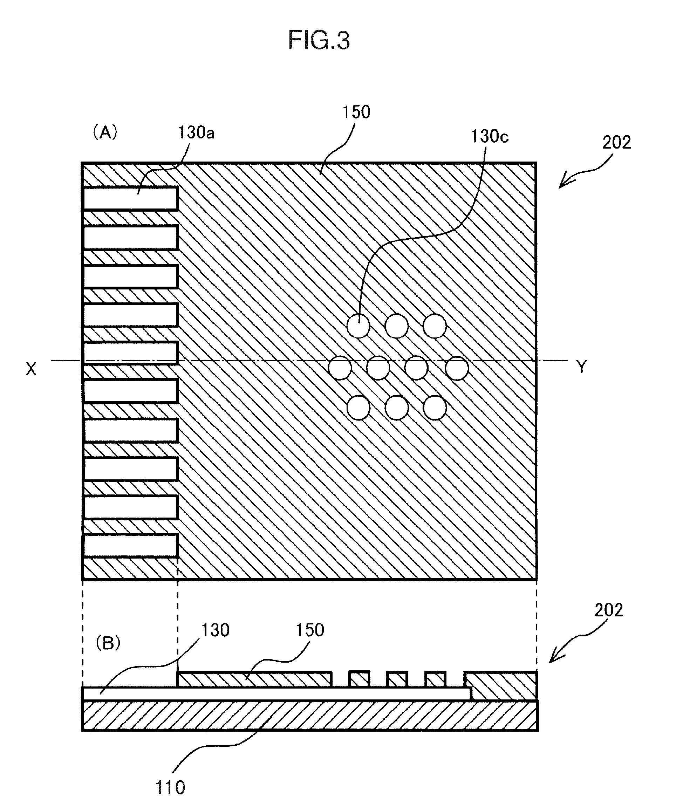

Figs. 2 and 3 illustrate examples of the configuration of a patterned electrode substrate.

Fig. 2 illustrates laminated body 200 in which patterned electrode substrate 130 is provided on glass substrate 110. Fig. 2A is a top schematic view of laminated body 200, and Fig. 2B is a side schematic view of laminated body 200. In laminated body 200 illustrated in Fig. 2A, electrode substrate 130 having rectangular electrode substrate 130a and round electrode substrate 130c, which are coupled via linear electrode substrate 130b, on glass substrate 110 is illustrated. In Fig. 2A, in addition to electrode 130 composed of a combination of rectangular electrode substrate 130a, linear electrode substrate 130b and round electrode substrate 130c, nine more electrodes which have the same configuration, but to which reference numerals are not attached, are illustrated.

For example, the layer formed of a metallic salt or a metallic oxide and the biomolecular probe-immobilizing layer to which a biomolecular probe is immobilized may be formed on round electrode substrate 130c, and an electric potential measuring device may be connected to rectangular electrode substrate 130a with linear electrode substrate 130b serving as a wiring, whereby the electric potential of the biomolecule can be detected.

In a case in which the layer formed of a metallic salt or a metallic oxide and the biomolecular probe-immobilizing layer to which a biomolecular probe is immobilized are to be formed on round electrode substrate 130c, a resist (for example, SU-8 manufactured by Nippon Kayaku Co., Ltd.) may be applied to glass substrate 110.

Fig. 3 illustrates laminated body 202 obtained by applying a resist to laminated body 200 illustrated in Fig. 2.

Fig. 3A is a top schematic view of laminated body 202, and Fig. 3B is a side schematic view of laminated body 202 at an alternate long and short dashed line (-·-·-) that links X and Y illustrated in Fig. 3A.

By applying resist 150 to electrode substrate 130 and glass substrate 110 except for rectangular electrode substrate 130a and round electrode substrate 130c, laminated body 202 in which rectangular electrode substrate 130a and round electrode substrate 130c are exposed is formed as illustrated in Figs. 3A and 3B. For example, by applying a solution or the like for surface treatment, such as chloric acid, to exposed round electrode substrate 130c, a layer formed of a metallic salt or a metallic oxide can be formed. By applying a solution in which a biomolecular probe-immobilizing material to which a biomolecular probe is bound is dissolved to exposed round electrode substrate 130c, a biomolecular probe-immobilizing layer to which the biomolecular probe is immobilized can be formed.

The fixation of the biomolecular probe-immobilizing material to the electrode substrate can be confirmed by, for example, carrying out X-ray photoelectron spectroscopy such as X-ray photoelectron spectroscopy (XPS) or electron spectroscopy for chemical analysis (ESCA) on the surface of the electrode substrate. For example, in a case in which an alkanethiol is used as the biomolecular probe-immobilizing material, a sulfur atom-derived peak is detected when the alkanethiol is fixed to the electrode substrate.

In addition, the immobilization of the biomolecular probe to the biomolecular probe-immobilizing material can be confirmed by, for example, labeling the biomolecule with a fluorescent molecule and carrying out fluorescent detection.

### [Substrate]

The electrode chip for detecting a biomolecule includes a substrate for supporting the electrode substrate.

The substrate is not particularly limited, and the substrate may be made of an inorganic material typified by a glass substrate, an ITO substrate, a metal substrate or the like, or may be an organic material typified by a polyester substrate, a polyolefin substrate or the like. In addition, a semiconductor provided with an electronic device such as a field effect transistor (FET) may be used as the substrate.

The electrode chip for detecting a biomolecule may further include one or more intermediate layers between the substrate and the electrode substrate. The intermediate layer may be a functional layer such as an adhesion layer for enhancing the adhesion between the substrate and the electrode substrate. In a case in which the intermediate layer is used as the adhesion layer, a material having a high affinity to both the substrate and the electrode substrate is preferably used. For example, in a case in which a glass substrate is used as the substrate and silver is used as the electrode substrate, titanium (Ti) having a favorable affinity for glass and silver is preferably used for the intermediate layer.

When a semiconductor in which a FET is formed is used as the substrate, a minute change in the electric potential at an solid-liquid interface between the electrode in the electrode chip for detecting a biomolecule and an aqueous solution containing a biomolecule can be measured.

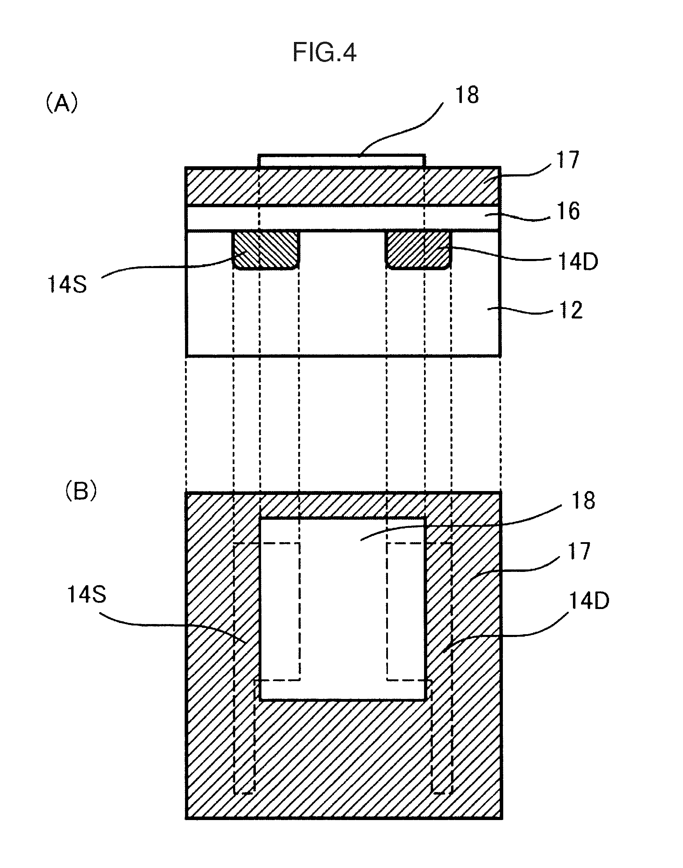

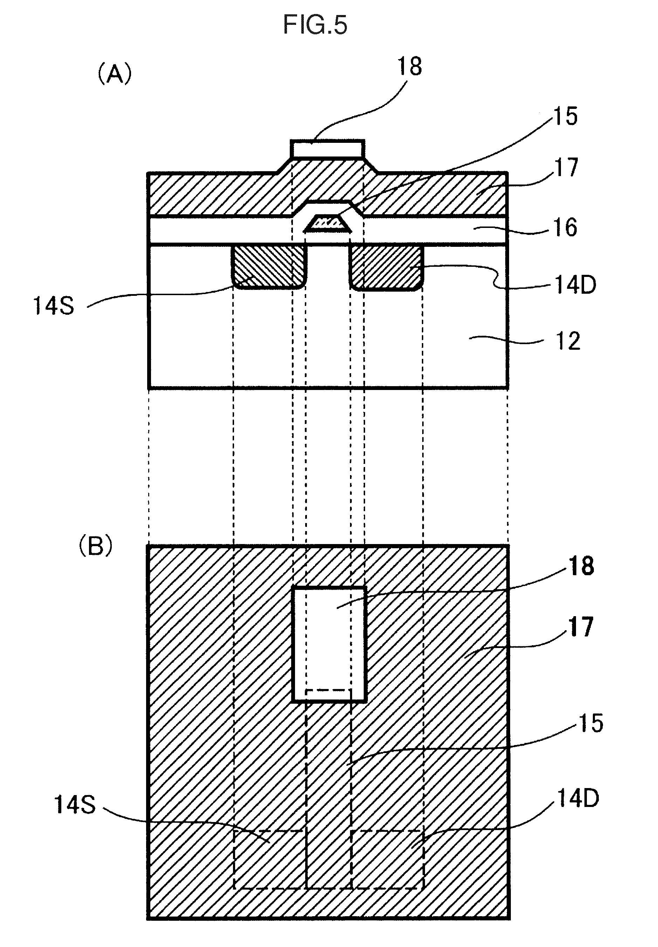

Examples of the FET include floating gate-type FETs, extended FETs and the like. An example of the configuration of the structure of the FET will be described using Figs. 4 and 5.

Fig. 4 illustrates a schematic view of a floating gate-type FET, and Fig. 5 illustrates a schematic view of an extended FET. Figs 4A and 5A are cross-sectional views, and Figs. 4B and 5B are top views.

Fig. 4A illustrates a floating gate-type FET (hereinafter, referred to as "F-FET"). In Fig. 4A, F-FET includes: silicon substrate 12; drain 14D and source 14S, which are separately provided on silicon substrate 12; gate insulation film 16 provided on silicon substrate 12, drain 14D and source 14S; gate electrode 17; and floating electrode 18.

In transistors, generally, floating electrode 18 is formed in a channel area between drain 14D and source 14S, and the electric potential is detected using floating electrode 18. Therefore, in F-FET, a channel area between drain 14D and source 14S is located in an area vertically beneath floating electrode 18 as illustrated in Fig. 4B.

Meanwhile, Fig. 5A illustrates an extended FET (hereinafter, referred to as "E-FET"). In Fig. 5A, E-FET includes: silicon substrate 12; drain 14D and source 14S, which are separately provided on silicon substrate 12; gate insulation film 16 provided on silicon substrate 12, drain 14D and source 14S; gate electrode 17; and floating electrode 18. In addition, E-FET includes extraction electrode 15 inside insulation film 16.

As a result of the inclusion of extraction electrode 15 as described above, the channel area between drain 14D and source 14S does not have to be located in an area vertically beneath floating electrode 18, and floating electrode 18 can be freely formed at any position.

In E-FET, the channel area between drain 14D and source 14S is not located in an area vertically beneath the floating electrode 18 as illustrated in Fig. 4B, and one end of extraction electrode 15 is located in the area vertically beneath floating electrode 18. In addition, the channel area between drain 14D and source 14S is located in an area vertically beneath the other end of extraction electrode 15.

In the floating gate-type FET (F-FET) and the extended FET (E-FET), gate insulation film 16 is formed using one of, or a combination of two or more of, materials such as silicon oxide (SiO₂), silicon nitride (SiN), aluminum oxide (Al₂O₃) and tantalum oxide (Ta₂O₅), and, generally, the gate insulation film is designed to have a bilayer structure in which silicon nitride (SiN), aluminum oxide (Al₂O₃) or tantalum oxide (Ta₂O₅) is layered on silicon oxide (SiO₂) in order to favorably maintain an action of the transistor.

Gate electrode 17 is desirably made of polysilicon (Poly-Si), which has high compatibility with a so-called self-align process in which source 14S and drain 14D are formed by injecting ions through a polysilicon gate.

Floating electrode 18 is desirably made of a material having a high affinity for the electrode substrate, and can be formed using a noble metal such as gold, platinum, silver or palladium.

In the extended FET, since extraction electrode 15 is used as a wiring, the extraction electrode is preferably formed using a material having a low resistance and favorable processability for etching or the like, and examples of materials that can be used include polysilicon (Poly-Si), aluminum, molybdenum and the like.

In addition, a pattern-forming method of floating electrode 18 such as a lift-off method enables extraction electrode 15 and floating electrode 18 to be formed using the same material, for example, gold.

### <Method for detecting a biomolecule>

A method for detecting a biomolecule of the invention includes:
an aqueous solution contact step of bringing an electrode chip for detecting a biomolecule into contact with an aqueous solution containing at least one kind of biomolecule, the electrode chip for detecting a biomolecule including:
   a substrate; and
   an electrode that includes an electrode substrate, at least one of a metallic salt or a metallic oxide provided on an outermost surface on an opposite side of the electrode substrate from a side provided with the substrate, and a biomolecular probe-immobilizing material which is provided on the outermost surface and to which a biomolecular probe is immobilized; and
a detection step of detecting a change in a solid-liquid interface electric potential of the electrode.

That is, the method for detecting a biomolecule of the invention includes an aqueous solution contact step of bringing the electrode chip for detecting a biomolecule of the invention described above into contact with an aqueous solution containing at least one kind of biomolecule; and a detection step of detecting a change in a solid-liquid interface electric potential of the electrode.

### [Aqueous Solution Contact Step]

In the aqueous solution contact step, the electrode chip for detecting a biomolecule of the invention is brought into contact with an aqueous solution containing at least one kind of biomolecule (hereinafter, also referred to as a "biomolecule aqueous solution").

The method for bringing the electrode chip into contact with the biomolecule aqueous solution is not particularly limited as long as the at least one of a metallic salt or a metallic oxide included in the electrode chip for detecting a biomolecule and the biomolecular probe immobilized to the biomolecular probe-immobilizing material are brought into contact with the aqueous solution. For example, only the outermost surface of the electrode chip for detecting a biomolecule may be immersed in the biomolecule aqueous solution, or droplets of the biomolecule aqueous solution may be dropped on the outermost surface of the electrode chip for detecting a biomolecule, or the electrode chip for detecting a biomolecule may be immersed in the biomolecule aqueous solution.

As a result of the step described above, the electric potential at the solid-liquid interface between the electrode and the aqueous solution is stabilized by the at least one of a metallic salt or a metallic oxide in the electrode chip for detecting a biomolecule of the invention. In addition, the biomolecular probe immobilized to the biomolecular probe-immobilizing material of the electrode chip for detecting a biomolecule of the invention captures a biomolecule in the aqueous solution, and a change in the electric potential at the solid-liquid interface caused by the capturing of the biomolecule is detected, whereby the presence of the biomolecule can be quantitatively detected.

For example, in a case in which a number of genes, including a target gene to be measured, are present in the biomolecule aqueous solution, and the biomolecular probe is a DNA probe having a complementary base sequence with the target gene, the target gene and the DNA probe form a complementary complex under appropriate reaction conditions [hybridization]. The biomolecular probe captures the biomolecule by forming the complex.

### [Detection Step]

In the detection step, a change in the solid-liquid interface electric potential between the electrode in the electrode chip for detecting a biomolecule and the biomolecule aqueous solution or a detection solution is detected.

The biomolecule in the biomolecule aqueous solution has a positive charge or a negative charge. For example, when a biomolecule to be detected is a nucleic acid, generally, a buffer solution with a pH of 7 to 8 is prepared as the biomolecular probe aqueous solution. In this pH environment, DNA has a negative charge. The nucleic acid thus charged forms a complex with a DNA probe that is a biomolecular probe through hybridization, whereby the charge density at the solid-liquid interface between the electrode and the biomolecule aqueous solution changes, and the surface potential changes.

### - Washing step -

In the method for detecting a biomolecule of the invention, a washing step of washing the electrode chip for detecting a biomolecule using a washing solution may be introduced before an inspection step. The washing solution is not particularly limited as long as the solution can remove a biomolecular component aqueous solution attached to the electrode chip for detecting a biomolecule, and examples thereof include water, a phosphate buffer solution, a NaCl aqueous solution, a normal saline solution and the like.

After the electrode chip for detecting a biomolecule of the invention and the biomolecule aqueous solution are brought into contact with each other, the electrode chip for detecting a biomolecule may be washed using the washing solution, and biomolecules, other than the target molecule, and interfering components that are non-specifically adsorbed to the electrode chip may be removed, whereby measurement can be carried out with high accuracy. After the electrode chip for detecting a biomolecule is washed, a solution for detecting a change in the electric potential at the solid-liquid interface of the electrode (detection fluid) is introduced to the surface of the electrode chip. Since an electric double layer is formed in the solid-liquid interface, a change in the electric potential at the solid-liquid interface is dependent on the electric double layer. The width (thickness) of the electric double layer is called a Debye length, and is a function of ion intensity.

The Debye length is small in a solution having a high salt concentration, and, for example, the Debye length is approximately 1 nm in a 100 mmol/L (hereinafter also expressed as mM) NaCl solution. On the other hand, the Debye length increases in a diluted aqueous solution, and, for example, the Debye length is approximately 10 nm in a solution with 1 mmol/L of NaCl. In order to carry out high-sensitivity measurement, the Debye length is preferably longer; after the biomolecular component aqueous solution attached to the electrode chip for detecting a biomolecule is removed through washing, it is desirable to replace with an optimized concentration of the detecting solution, and to measure a change in the electric potential at the solid-liquid interface. As a detection solution, for example, a phosphate buffer solution with a concentration of from 1 mmol/L to 10 mmol/L may be used for an electrode chip having a metallic oxide surface, and a sodium chloride aqueous solution or a potassium chloride aqueous solution having a concentration of from 1 mmol/L to 10 mmol/L may be used for an electrode chip having a metallic salt surface such as silver chloride.

The change in the electric potential is measured using an electric potential measuring device connected to the electrode. Examples of the electric potential measuring device include an electrometer manufactured by Keithley Instruments Inc.

A change in the surface potential of the electrode may be measured using the FET described above. A change in the surface potential performs the same action as that of a change in the gate voltage of FET, and changes the conductivity of the channel. The formation of a complex through hybridization, that is, the presence of the target gene, can be detected as a change in the drain current that flows between the source and the drain.

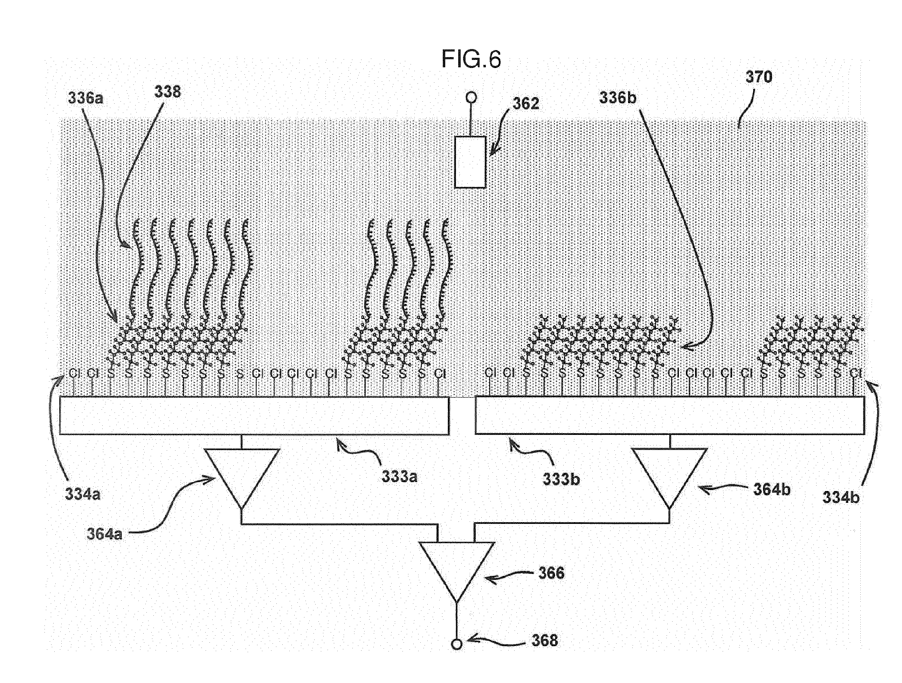

In Fig. 6, an example of the configuration of a measurement system in the method for detecting a biomolecule of the invention is illustrated using a schematic view. The measurement system illustrated in Fig. 6 uses an electrode chip for detecting a biomolecule and a reference chip, and carries out a differential measurement using the two chips.

Fig. 6 illustrates a part of the electrode chip for detecting a biomolecule including an electrode configured using electrode substrate 333a and the reference chip configured using electrode substrate 333b. Both of electrode substrate 333a and electrode substrate 333b are formed of silver, and supported by glass substrates that are not illustrated in the drawing.

A surface treatment is carried out on a part of a surface of electrode substrate 333a so as to form a silver chloride layer (inorganic layer), and biomolecule-immobilizing material 336a is fixed to remaining regions of the surface. Chloride ions (Cl⁻) 334a are exposed on the surface of the silver chloride layer. Biomolecule-immobilizing material 336a is fixed to electrode substrate 333a through sulfur (S). Furthermore, biomolecular probe 338 is immobilized to biomolecule-immobilizing material 336a. Therefore, an electrode including electrode substrate 333a has, on its outermost surface, the silver chloride layer and the biomolecular probe-immobilizing layer constituted by biomolecule-immobilizing material 336a to which biomolecular probe 338 is immobilized.

A surface treatment is carried out on a part of the surface of electrode substrate 333b so as to form a silver chloride layer (inorganic layer), and biomolecule-immobilizing material 336b is fixed to the remaining surface. Chloride ions (Cl⁻) 334b are exposed on the surface of the silver chloride layer. The biomolecular probe is not immobilized to biomolecule-immobilizing material 336b. Therefore, an electrode constituted by electrode substrate 333b has the silver chloride layer and the biomolecule-immobilizing layer constituted by biomolecule-immobilizing material 336a formed on the outermost surface.

The outermost surfaces of the respective electrodes are in contact with biomolecule aqueous solution 370. That is, the silver chloride layer and the biomolecule-immobilizing layer of electrode substrate 333a, and the silver chloride layer and the biomolecule-immobilizing layer of electrode substrate 333b, are immersed in biomolecule aqueous solution 370, the biomolecule-immobilizing layer of electrode substrate 333a being constituted by biomolecule-immobilizing material 336a to which biomolecular probe 338 is immobilized, and the biomolecule-immobilizing layer of electrode substrate 333b being constituted by biomolecule-immobilizing material 336b.

Reference electrode 362 is also immersed in biomolecule aqueous solution 370.

The combined use of reference electrode 362 facilitates stable measurement of the surface potentials of the electrode chip for detecting a biomolecule and the reference chip.

Electrode substrates 333a and 333b are connected to computation amplifiers 364a and 364b, respectively, and computation amplifiers 364a and 364b are connected to computation amplifier 366. Computation amplifier 366 is further connected to difference-amplifying output 368.

In the measurement system having this configuration, the electrode chip for detecting a biomolecule including electrode substrate 333a measures the surface potential using computation amplifier 364a, and the reference chip including electrode substrate 333b measures the surface potential using computation amplifier 364b. The measurement signals of the respective surface potentials are inputted to differential-amplifying output 368 through computation amplifier 366.

According to the differential measurement described above, a change in the output caused by a change in the ambient temperature or light due to a difference in electric characteristics between the electrode chip for detecting a biomolecule and the reference chip can be compensated, and only the output change caused by hybridization between the target biomolecule (for example, a gene) and biomolecular probe 338 (for example, a DNA probe) can be accurately detected.

Since the electrode chip for detecting a biomolecule and the reference chip desirably have the same electric characteristics, a pair of chips integrated on the same substrate are desirably used. In a case in which plural kinds of biomolecules are measured simultaneously using plural electrode chips for detecting a biomolecule, the reference electrode can be shared, and differential measurement is carried out between each of the different electrode chips for detecting a biomolecule and the shared reference chip.

Furthermore, another aspect of the method for detecting a biomolecule will be described.

In this method for detecting a biomolecule of the invention, DNA having a specific gene sequence can be accurately detected using a single base elongation reaction of DNA.

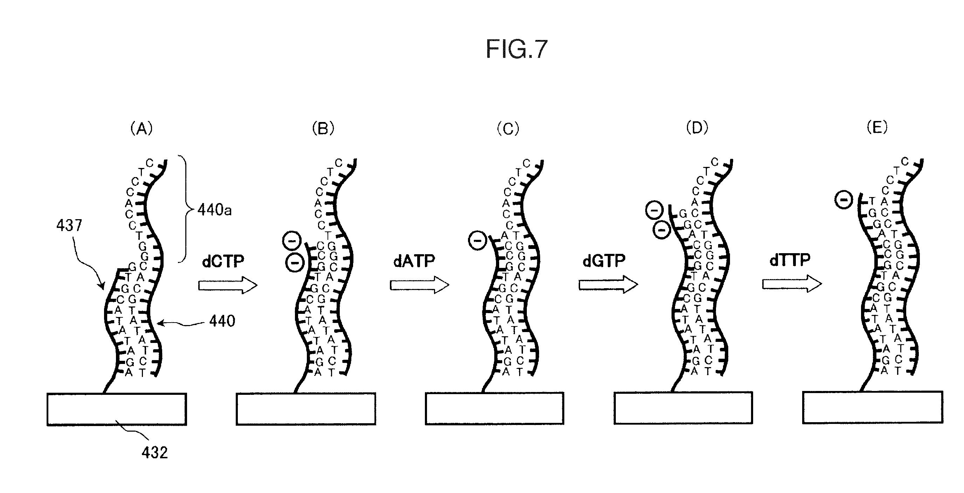

Fig. 7 illustrates a schematic view of a reaction illustrating an example of the single base elongation reaction of a nucleic acid in the method for detecting a biomolecule of the invention.

In Figs. 7A to 7E, electrode substrate 432, oligonucleotide probe 437 that is a single-strand DNA probe immobilized to electrode substrate 432, and target DNA 440 that is a target of which the gene sequence is to be detected are illustrated. Oligonucleotide probe 437, which is a single-strand DNA probe immobilized to electrode substrate 432, is immersed in a biomolecule aqueous solution containing a nucleic acid (nucleic acid aqueous solution), and target DNA 440 is a nucleic acid contained in the nucleic acid aqueous solution.

Electrode substrate 432 is a part of the electrode chip for detecting a biomolecule of the invention described above, and the layer formed of a metallic salt or a metallic oxide (inorganic layer) is also formed on a surface of electrode substrate 432. Here, configurations other than electrode substrate 432 and oligonucleotide probe 437 are not shown in Figs. 7A to 7E.

In Fig. 7A, oligonucleotide probe 437 captures target DNA 440, and a part of target DNA 440 and oligonucleotide probe 437 form a complex through hybridization. That is, bases in the part of target DNA 440 and bases in oligonucleotide probe 437 are complementarily bonded.

In the base sequence of target DNA 440, a base sequence (target base sequence) 440a that does not form the complex with oligonucleotide probe 437 can be analyzed using a single base elongation reaction of DNA.

It is known that each of the bases in the nucleic acid, such as adenine (A), thymine (T), guanine (G) and cytosine (C), has a property of complementarily reacting with a specific base so as to form a pair. Therefore, using this property, the details of target base sequence 440a can be analyzed by detecting the bases in target base sequence 440a to be analyzed, one by one from one end.

In Fig. 7A, the bases in target DNA 440 and oligonucleotide probe 437 are aligned as shown in the following sequences from the electrode substrate 432 side.

Target DNA 440: TCTATATGCACGGTCCACCTC
Oligonucleotide probe 437: AGATATACGTG

In the base sequence of target DNA 440, a region TCTATATGCAC from the electrode substrate 432 side forms the complex, but bases in a base sequence (target base sequence 440a) consisting of GGTCCACCTC do not form pairs.

Under these circumstances, addition of a DNA polymerase and deoxycytidine 5'-triphosphate (dCTP) to an nucleic acid aqueous solution enables introduction of base C into an end of oligonucleotide probe 437, the base C being capable of complementarily reacting with base G in target base sequence 440a adjacent to a base (base C) forming the complex through hybridization.

Examples of a deoxynucleotide include deoxyadenosine 5'-triphosphate (dATP) capable of introducing base A that complementarily reacts with base T into the nucleic acid, deoxyguanosine 5'-triphosphate (dGTP) capable of introducing a base G that complementarily reacts with a base C into the nucleic acid, deoxythymidine 5'-triphosphate (dTTP) capable of introducing a base T that complementarily reacts with a base A into the nucleic acid, and the like.

In the circumstances illustrated in Fig. 7A, there are two bases G in the base sequence of target DNA 440 that are close to the base (base C) that forms the complex through hybridization. Therefore, when dCTP is added to the nucleic acid aqueous solution, two bases C are introduced to the end of oligonucleotide probe 437, as illustrated in Fig. 7B. The bases C introduced to the end of oligonucleotide probe 437 complementarily react and bind to the bases G at the end of target base sequence 440a, thereby forming a complex.

In addition, since DNA has a negative charge as described above, a negative charge is detected each time a base pair is formed. Therefore, from the amount of the detected change in the surface potential, the number of complementary reactions that has occurred, that is, the number of bases that has formed a complex through hybridization can be detected.

Meanwhile, a base G complementarily reacts only with a base C. Therefore, in the circumstances illustrated in Fig. 7A, a single base elongation reaction does not occur when a deoxynucleotide other than dCTP, such as dATP, dGTP or dTTP is added to the nucleic acid aqueous solution.

Therefore, in the circumstances illustrated in Fig. 7A, hybridization occurs and the surface potential of the electrode changes only when dCTP is added, and, therefore, the numbers and kinds of bases in the target base sequence 440a can be detected from the amount of change in the surface potential and the kind of deoxynucleotide that causes the change in the surface potential.

In Fig. 7B, the base adjacent to the base (base G) in the target base sequence which forms a complex through hybridization is base T. Therefore, in the circumstances illustrated in Fig. 7B, the surface potential of the electrode changes only when dATP is added to the nucleic acid aqueous solution, and, therefore, the number of bases T can be detected from the amount of change in the electric potential. As illustrated in Fig. 7C, only one base pair is generated when dATP is injected.

Meanwhile, when various kinds of deoxynucleotides are sequentially added to the nucleic acid aqueous solution in the circumstances illustrated in Fig. 7A, plural kinds of deoxynucleotides are mixed and may result in hindering quantitative detection. Therefore, it is more preferable to immerse the electrode chip for detecting a biomolecule including electrode substrate 432 and oligonucleotide probe 437 in an aqueous solution containing a DNA polymerase and a deoxynucleotide, than to add a DNA polymerase and a deoxynucleotide to a nucleic acid aqueous solution in which the electrode chip for detecting a biomolecule including electrode substrate 432 and oligonucleotide probe 437 is immersed. In addition, in a case in which the electrode chip for detecting a biomolecule which has been immersed in an aqueous solution containing a DNA polymerase and a deoxynucleotide is to be re-immersed in a different kind of aqueous solution containing a DNA polymerase and a deoxynucleotide, it is preferable to wash at least the electrode of the electrode chip for detecting a biomolecule using water, a buffer solution or the like before the re-immersion of the electrode chip for detecting a biomolecule in the different kind of aqueous solution containing a DNA polymerase and a deoxynucleotide.

In a case in which the elongation reaction is carried out while introducing a DNA polymerase and four kinds of deoxynucleotides to a surface of the electrode chip, and a deoxynucleotide to be introduced is complementary with the base in the target DNA, a base is synthesized on the target DNA, whereby the base length elongates, and the negative charge increases, and, simultaneously, pyrophosphoric acid is generated, and hydrogen ions are released. Here, hydrogen ions corresponding to the number of extended bases are released. Therefore, the concentration of hydrogen ions in the vicinity of the surface of the electrode chip, serving as a site for the elongation reaction, changes, that is, the pH changes. An electrode chip according to the invention having a surface made from a metallic oxide serves as a favorable pH sensor since the dissociation equilibrium of the metallic oxide expressed by the Formula (2) described above shifts in accordance with the concentration of hydrogen ions, and the electric potential of the electrode also changes in accordance with the shift. Therefore, the electrode chip containing a metallic oxide in the surface is an effective configuration with respect to the detection of hydrogen ions released as a result of the elongation reaction.

When oligonucleotide probe 437 that is a single-strand nucleic acid is reacted with dGTP and dTTP in this order as illustrated in Figs. 7D and 7E, oligonucleotide probe 437 is extended base by base, and sequentially forms a complex with the target DNA 440, which is the target nucleic acid. In addition, when the surface potential of the electrode does not change regardless of the kind of DNA polymerase added, the absence of the change means that the analysis of the base sequence of the target DNA is completed, and therefore the analysis finishes.

### <Biomolecule Detection Electrode Chip Including Hairpin Aptamer Probe and Method for Detecting Biomolecule Using the Electrode Chip>

Another embodiment to which the electrode chip for detecting a biomolecule of the invention and the method for detecting a biomolecule of the invention, both of which have been described above, are applied will be described.

When a biomolecule detection electrode chip including a hairpin aptamer probe that uses an intercalator and adenosine triphosphate (ATP) is used, the target biomolecule can be accurately detected.

In the biomolecule detection electrode chip including a hairpin aptamer probe, the biomolecular probe included in the electrode chip for detecting a biomolecule is a hairpin aptamer probe; the biomolecule detection electrode chip including a hairpin aptamer probe has the same configuration as that of the electrode chip for detecting a biomolecule described above, except for the above difference. In addition, the biomolecule detection chip including a hairpin aptamer probe naturally has the same superiority with respect to the stability of the electric potential at the solid-liquid interface between the liquid and the electrode, due to the presence of at least one of a metallic salt or a metallic oxide in the surface of the electrode substrate to which the biomolecular probe is immobilized.

The hairpin aptamer probe can induce a large signal by changing its structure when recognizing a target in the presence of a reporter molecule (intercalator). Furthermore, by using an electronic transistor such as FET as the substrate included in the electrode chip, a new class of biology-based information processing device that responses external stimuli from a biochemical source is expected to be realized using the characteristics of a transistor such as switching and amplification of a specific electric signal.

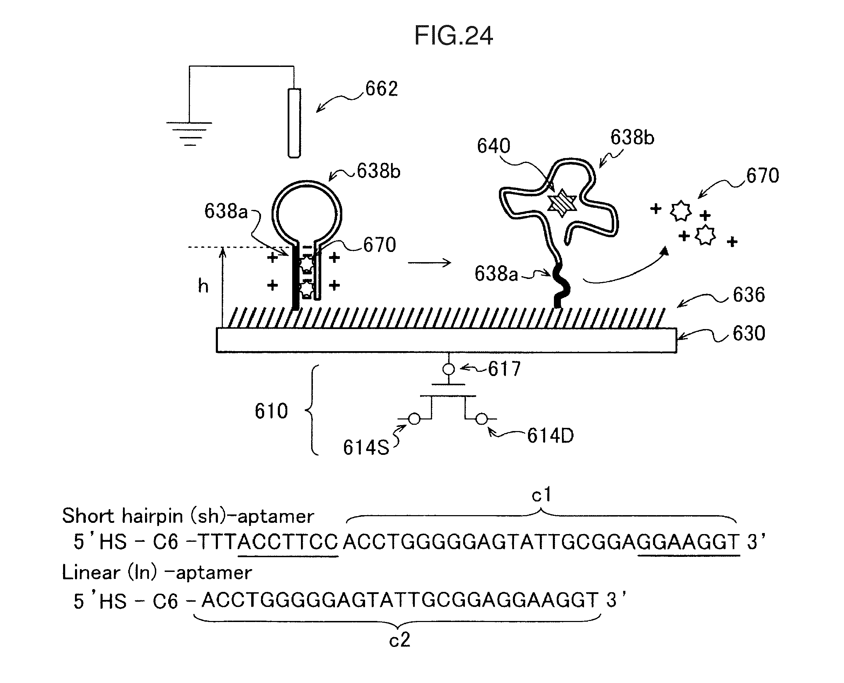

The details of the biomolecule detection electrode chip including a hairpin aptamer probe will be described using Fig. 24.

Fig. 24 illustrates a biomolecule detection electrode chip including hairpin aptamer probe, ATP 640, intercalator 670 and reference electrode 662, the biomolecule detection electrode chip including a hairpin aptamer probe being constituted by extended gate FET substrate 610, electrode substrate 630, biomolecular probe-immobilizing material layer 636 and hairpin aptamer probe 638 (biomolecular probe).

FET substrate 610, electrode substrate 630 and biomolecular probe-immobilizing material layer 636 are sequentially disposed one on another in layers, and hairpin aptamer probe 638 is immobilized to biomolecular probe-immobilizing material layer 636 as a biomolecular probe. FET substrate 610 includes drain electrode 614D, source electrode 614S and gate electrode 617, and, since gate electrode 617 is connected to electrode substrate 630, FET substrate 610 senses a change in electric potential occurring on electrode substrate 630.

Biomolecular probe-immobilizing material layer 636 is a layer formed by bonding the biomolecular probe-immobilizing material to electrode substrate 610; for example, a tightly-packed self-assembled monolayer (SAM) can be formed by using an alkanethiol. By using the SAM, a biomolecular probe can be immobilized to the electrode at a high density, and can increase the accuracy of the detection of the biomolecule as described above.

As a method for forming biomolecular probe-immobilizing material layer 636, for example, 6-mercapto-1-hexanol (MCH) may be applied to electrode substrate 610.

Hairpin aptamer probe 638 that can bind with ATP 640 is immobilized to biomolecular probe-immobilizing material layer 636 as the biomolecular probe.

As hairpin aptamer probe 638, a compound (hereinafter, also referred to as specific probe compound) including structure portion 638a capable of forming a structure into which intercalator 670 can easily enter and structure portion 638b including an adenosine 5'-triphosphate (ATP)-binding sequence is used.

The structure portion including an ATP-binding sequence actively binds to ATP, and does not react with, for example, guanosine triphosphate (GTP).

In Fig. 24, two hairpin aptamer probes 638 are illustrated. One of them in the left side of Fig. 24 is illustrated as a short hairpin-shaped aptamer probe (sh-aptamer) in which structure portion 63 8b forms a closed loop, and the other of them in the right side of Fig. 24 is illustrated as a linear aptamer probe (In-aptamer) in which structure portion 63 8b forms an open loop.

Meanwhile, in the invention, the "hairpin aptamer probe" refers to a biomolecular probe for the biomolecule detection electrode chip including a hairpin aptamer probe, and the scope thereof includes both the conformation of the sh-aptamer and the conformation of the In-aptamer.

The sh-aptamer is the conformation of the specific probe compound molecule when structure portion 63 8b including the ATP-binding sequence does not trap ATP, and the Inaptamer is the conformation of the specific probe compound molecule when structure portion 638b including the ATP-binding sequence traps ATP.

When the specific probe compound molecule has the conformation illustrated as the sh-aptamer, structure portion 638a forms a lamellar molecular structure, in which an intercalator can easily enter a space between the layers. Meanwhile, structure portion 638a in the sh-aptamer is also referred to as a "stem".

The intercalator has a positive charge, and forms a structure that is bonded to structure portion 638a of the sh-aptamer due to an electrostatic interaction, a π-π interaction or the like. Examples thereof that can be used include compounds typified by DAPI having the following structure.

When the intercalator enters into the specific probe compound molecule, the hairpin aptamer probe becomes positively charged.

The size of structure portion 638a in the sh-aptamer is preferably 3 nm or less (h≤3 nm), including the size of the SAM.

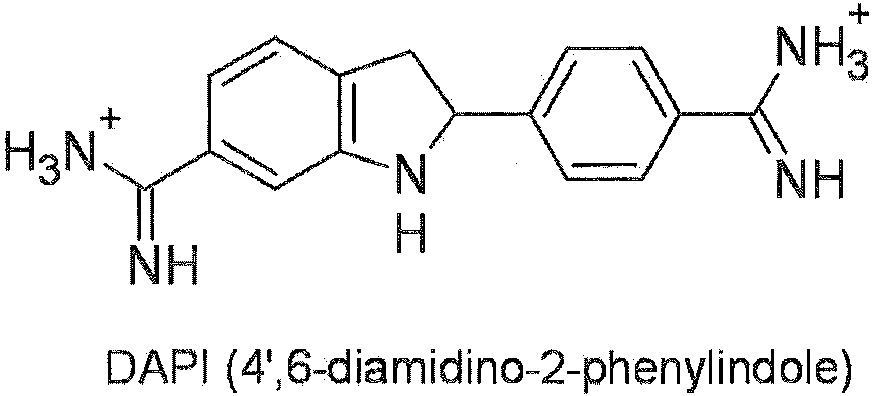

Meanwhile, in an environment in which ATP is present, the conformation of the specific probe compound molecule changes to open structure portion 638b including the ATP-biding sequence, and hairpin aptamer probe 638 captures ATP 640. In addition, the opening of structure portion 638b also results in release of intercalator 670 from hairpin aptamer probe 638, and loss of the positive charge of hairpin aptamer probe 638.

A biomolecule can be recognized using a DNA binding species and a label-free method, by detecting a change in the conformation of hairpin aptamer probe 638 from the closed loop to the open loop as an electrical signal in the above-described manner.

The bottom part of Fig. 24 illustrates examples of the structures of the specific probe compound molecules that form the sh-aptamer and the In-aptamer. Meanwhile, each of the upper and lower structural formulae in Fig. 24 illustrates a state in which an alkanethiol having 6 carbon atoms and the specific probe compound molecule bind to each other, and the 37mer base sequence portion except "HS-C6-" forms the structure of the specific probe compound. In the structural formulae, "C6" refers to an alkyl chain having 6 carbon atoms, and represents a part of an alkanethiol.

The c1 portion in the sh-aptamer illustrated by the 27mer base sequence and the c2 portion in the In-aptamer correspond to structure portion 638b of the specific probe compound molecule (hairpin aptamer probe 638), and forms the ATP-binding sequence. In addition, the sh-aptamer forms a pair through the complementary reaction of the underlined 7mer bases, and forms a part of structure portion 638a.

The amount of positive charge that hairpin aptamer probe 638 has lost due to the change from the sh-aptamer structure to the In-aptamer structure is converted to an electric potential difference signal through the field effect of an FET. In a configuration of an FET integrated circuit for electric potential difference change (Δφ), the conversion may be expressed by a simple expression of Δφ=ΔQ/C (ΔQ represents a change in the total charge of the gate solution interface electric double layer capacitance C). The concentration of the buffer solution adjusts the screening of ions for electric potential analysis. The real-time measurement of the interface electric potential can be carried out using a diluted buffer (DPBS which is a 15 mM Dulbecco's phosphate buffered physiological saline having a pH of 7.4).

Meanwhile, the difference between the conformation of the sh-aptamer and the conformation of the In-aptamer can be determined by identifying the steric conformations using an epifluorescence microscope. In the identification of the steric conformation, an indicator dye (also referred to as a fluorescent label, a fluorescent probe or the like), such as TO-PRO-3, is used. As the indicator dye, a well-known dye, such as a product of Beckman Coulter, Inc., may be used.

### EXAMPLES

Hereinafter, the invention will be described in more detail using examples, but the invention is not limited to the following examples as long as the invention does not depart from the gist of the invention. Meanwhile, "%" and "parts" are based on mass unless specifically described otherwise.

### <Examples 1 to 3 and Comparative Example 1>

### [Production of Electrode Chip for Detecting Biomolecule]

Electrode chips 1 and 4 for detecting a biomolecule in which an electrode having a metallic salt AgCl on a metal electrode substrate was provided (Examples 1 and 3) were produced. Electrode chip 101 for detecting a biomolecule having an electrode in which the metal of a metal electrode substrate was exposed, and which did not have a metallic salt or a metallic oxide on the metal electrode substrate (Comparative Example 1) was also produced.

In addition, electrode chip 2 for detecting biomolecule in which an electrode having a metallic oxide Ta₂O₅, instead of the metallic salt, on a metal electrode substrate was provided (Example 2) was produced.

The production conditions of the respective electrode chips for detecting a biomolecule were as follows.

### [Production of Electrode Chip 1 for Detecting a Biomolecule (Example 1)]

### (Production of Electrode Substrate Laminated Body)

A silver (Ag) plate having a thickness of 90 nm and surface dimensions of 5 mm×5 mm was prepared as the metal electrode substrate. A glass substrate having a thickness of 1 mm and the same surface dimensions as those of the surface substrate was prepared as a substrate for supporting the electrode substrate. A titanium (Ti) plate having a thickness of 10 nm and the same surface dimensions as those of the surface substrate was prepared in order to enhance the adhesion between the electrode substrate and the glass substrate.

The prepared silver plate, the prepared titanium plate and the prepared glass substrate were disposed one on another in layers in this order, and adhered, thereby producing electrode substrate laminated body A.

### (Formation of Metallic Salt Layer)

Five electrode substrate laminated bodies A thus produced were prepared. The surfaces of the electrode substrates of four electrode substrate laminated bodies A out of the five were immersed in chelating solutions 1 and 2 prepared in the following manner, and dried, thereby obtaining surface-treated electrode substrate laminated bodies 1 to 4.

The duration of the contact between the silver plate and chelating solution 1 was set to 20 seconds for surface-treated electrode substrate laminated bodies 1 and 2, the duration of the contact between the silver plate and chelating solution 2 was set to 180 seconds for surface-treated electrode substrate laminated body 3, and the duration of the contact between the silver plate and chelating solution 2 was set to 300 seconds for surface-treated electrode substrate laminated body 4. The surfaces of the respective surface-treated electrode substrates were washed using water after the respective durations of contact.

Here, surface-treated electrode substrate laminated body 1 was obtained by immersing electrode substrate laminated body A in a 100 mM NaCl aqueous solution in advance, and then adding a 100 mM PDTA·Fe (III) aqueous solution so as to start a reaction. Surface-treated electrode substrate laminated body 2 was obtained by immersing electrode substrate laminated body A in a 100 mM PDTA·Fe (III) aqueous solution in advance, and then immersing the laminated body in a 100 mM NaCl aqueous solution so as to start a reaction. For surface-treated electrode substrate laminated bodies 1 and 2, the durations of contact described in Table 1 indicate the duration of contact with the PDTA·Fe (III) aqueous solution.

**Table 1**

| | Object to be coated | Coating solution | Duration of contact |
|---|---|---|---|
| | Type | Type | Seconds |
| Surface-treated electrode substrate laminated body 1 | Electrode substrate laminated body A | Chelating solution 1 | 20 |
| Surface-treated electrode substrate laminated body 2 | Electrode substrate laminated body A | Chelating solution 1 | 20 |
| Surface-treated electrode substrate laminated body 3 | Electrode substrate laminated body A | Chelating solution 2 | 180 |
| Surface-treated electrode substrate laminated body 4 | Electrode substrate laminated body A | Chelating solution 2 | 300 |

### - Preparation of Chelating Solution 1 -

· 1,3-diaminopropane tetraacetate·iron·ammonium·monohydrate [PDTA·Fe (III)] 100 mmol/L
· Sodium chloride (NaCl) 100 mmol/L

The components of the above composition were mixed to prepare a chelating solution 1.

### - Preparation of Chelating Solution 2 -

- 1,3-diaminopropane tetraacetate·iron·ammonium·monohydrate [PDTA·Fe (III)] 200 mmol/L
- Sodium chloride (NaCl) 200 mmol/L

The components of the above composition were mixed to prepare a chelating solution 2.

### (Formation of Self-Assembled Membrane SAM)

Six surface-treated electrode substrate laminated body 1 were prepared, the following SAM-forming solutions 1 to 5 were applied to the surfaces of the electrode substrates of five electrode substrate laminated bodies out of the six, thereby obtaining laminated bodies each of which had a SAM layered on the electrode substrate laminated body (hereinafter, also referred to as "SAM laminated bodies").

The SAM laminated bodies obtained by applying SAM-forming solutions 1 to 5 are referred to as SAM laminated bodies 1 to 5, respectively.

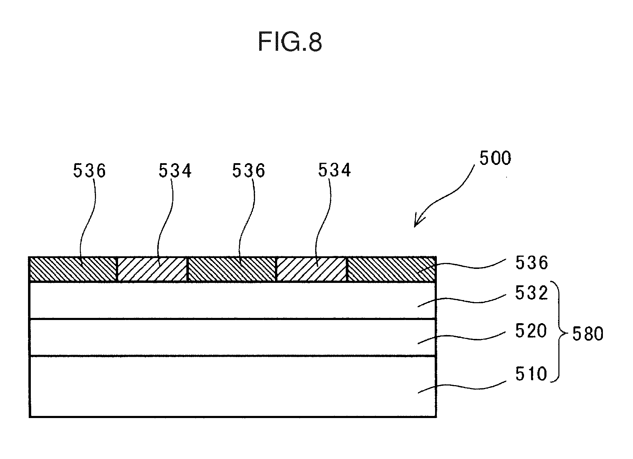

SAM laminated bodies 1 to 5 have a layered configuration illustrated in Fig. 8.

Fig. 8 is a cross-sectional schematic view of SAM laminated body 500, and SAM laminated body 500 includes electrode substrate laminated body 580. Electrode substrate laminated body 580 has glass substrate 510, intermediate layer 520 that is a titanium plate, and electrode substrate 532 that is a silver plate disposed one on another in layers in this order. Silver chloride layer 534 formed of silver chloride (AgCl) and self-assembled membrane SAM 536 are formed on electrode substrate 532 of electrode substrate laminated body 580. In the cross-sectional schematic view illustrated in Fig. 8, silver chloride layer 534 has two areas, and self-assembled membrane SAM 536 has three areas.

In addition, a comparative SAM-forming solution was applied to the surface of the electrode substrate of surface-treated electrode substrate laminated body 1 to obtain comparative laminated body 201.

The details of the preparation conditions of SAM-forming solutions 1 to 5 and the comparative SAM-forming solution were as follows.

### - Preparation of SAM-Forming Solution 1 -

- Biomolecular probe-immobilizing material 10-carboxy-1-decanthiol 10 µmol/L
- Solvent

### Ethanol

The components of the above composition were mixed, thereby preparing SAM-forming solution 1 having a concentration of the biomolecular probe-immobilizing material (hereinafter referred to as a "SAM concentration") of 10 µmol/L.

### - Preparation of SAM-Forming Solutions 2 to 5 and Comparative SAM-Forming Solution -

SAM-forming solutions 2 to 5 and the comparative SAM-forming solution having the SAM concentrations described in Table 2 were prepared in the same manner as that in the preparation of SAM-forming solution 1, except that the addition amount of the biomolecular probe-immobilizing material was changed from that in the preparation of SAM-forming solution 1.

**Table 2**

| | Biomolecular probe-immobilizing material | Solvent | SAM concentration |
|---|---|---|---|
| | Type | Type | µmol/L |
| SAM-forming solution 1 | 10-Carboxy-1-decanthiol | Ethanol | 10 |
| SAM-forming solution 2 | 10-Carboxy-1-decanthiol | Ethanol | 7 |
| SAM-forming solution 3 | 10-Carboxy-1-decanthiol | Ethanol | 5 |
| SAM-forming solution 4 | 10-Carboxy-1-decanthiol | Ethanol | 3 |
| SAM-forming solution 5 | 10-Carboxy-1-decanthiol | Ethanol | 1 |
| Comparative SAM-forming solution | None | Ethanol | 0 |

Table 3 describes the coating configurations of SAM laminated bodies 1 to 5 and comparative laminated body 201. The coating configurations of comparative SAM laminated body 101 and comparative SAM laminated body 102 described below are also described.

**Table 3**

| | Coating liquid | | Object to be coated (electrode substrate laminated body) |
|---|---|---|---|
| | Type | SAM concentration | Type |
| SAM laminated body 1 | SAM-forming solution 1 | 10 µmol/L | Surface-treated electrode substrate laminated body 1 |
| SAM laminated body 2 | SAM-forming solution 2 | 7 µmol/L | Surface-treated electrode substrate laminated body 1 |
| SAM laminated body 3 | SAM-forming solution 3 | 5 µmol/L | Surface-treated electrode substrate laminated body 1 |
| SAM laminated body 4 | SAM-forming solution 4 | 3 µmol/L | Surface-treated electrode substrate laminated body 1 |
| SAM laminated body 5 | SAM-forming solution 5 | 1 µmol/L | Surface-treated electrode substrate laminated body 1 |
| Comparative laminated body 201 | Comparative SAM-forming solution | 0 µmol/L | Surface-treated electrode substrate laminated body 1 |
| Comparative laminated body 101 | SAM-forming solution 1 | 10 µmol/L | Electrode substrate laminated body A |
| Comparative laminated body 102 | SAM-forming solution 4 | 3 µmol/L | Electrode substrate laminated body A |

### (Fixing of Biomolecular Probe)

An oligonucleotide having an amino group at its 5' end, which is a biomolecular probe, was reacted with and forms an amide bond with a carboxy group of the self-assembled membrane SAM in SAM laminated body 1 produced in the above-described manner, thereby immobilizing the biomolecular probe.

Electrode chip 1 for detecting a biomolecule of Example 1 was produced in the above-described manner.

### [Production of Electrode chip 101 for Detecting a Biomolecule (Comparative Example 1)]

### (Preparation of Electrode Substrate Laminated Body)

Electrode substrate laminated body A was used as an electrode substrate laminated body without being subjected to a surface treatment. Therefore, neither metallic salt nor metallic oxide was present on the surface of the metal electrode substrate of electrode substrate laminated body A used for the production of electrode chip 101 for detecting a biomolecule of Comparative Example 1, and a silver plate was exposed on the surface.

### (Formation of Self-Assembled Membrane SAM)

A self-assembled membrane SAM was formed on the electrode substrate in the same manner as that in the production of SAM laminated body 1, except that electrode substrate laminated body A which had not been subjected to a surface treatment was used as the electrode substrate laminated body instead of surface-treated electrode substrate laminated body 1. The obtained electrode substrate laminated body containing the self-assembled membrane SAM is referred to as "SAM laminated body 101".

### (Immobilization of Biomolecular Probe)

The biomolecular probe was immobilized to the self-assembled membrane SAM in the same manner as that in the production of electrode chip 1 for detecting a biomolecule, except that SAM laminated body 101 was used as a SAM laminated body instead of SAM laminated body 1.

Electrode chip 101 for detecting a biomolecule of Comparative Example 1 was produced in the above-described manner.

Separately, SAM laminated body 102 was produced as a comparative SAM laminated body.

SAM laminated body 102 was obtained by forming a self-assembled membrane SAM on the electrode substrate in the same manner as that in the production of SAM laminated body 4 having a SAM concentration of 3 µmol/L, except that the electrode substrate laminated body A which had not been subj ected to a surface treatment was used as the electrode substrate laminated body instead of surface-treated electrode substrate laminated body 1.

In this way, SAM laminated body 102, which was an electrode substrate laminated body containing the comparative self-assembled membrane SAM, was produced.

The configurations with respect to the types and SAM concentrations of the SAM laminated bodies used in the electrode chip 101 for detecting a biomolecule and the electrode chip 1 for detecting a biomolecule, and the types and surface forms of the surface treatments applied to electrode substrate laminated bodies A used in the production of the SAM laminated bodies (in the column "surface species") are summarized in Table 4.

**Table 4**

| | Configurations of SAM laminated body | | Electrode substrate laminated body A | |
|---|---|---|---|---|
| | Type | SAM concentration | Surface treatment | Surface species |
| Electrode chip 1 for detecting biomolecule | SAM laminated body 1 | 10 µmol/L | Yes | AgCl |
| Electrode chip 101 for detecting biomolecule | Comparative SAM laminated body 101 | 10 µmol/L | No | Ag |

### [Evaluation of Electrode chip 1 for Detecting a Biomolecule and Electrode Chip 101 for Detecting a Biomolecule]

### (Evaluation of Formation of Metallic Salt Layer)

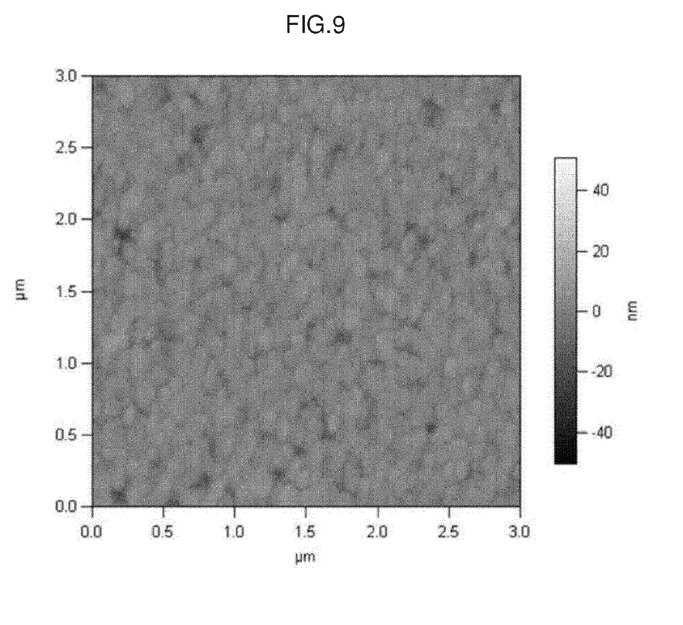

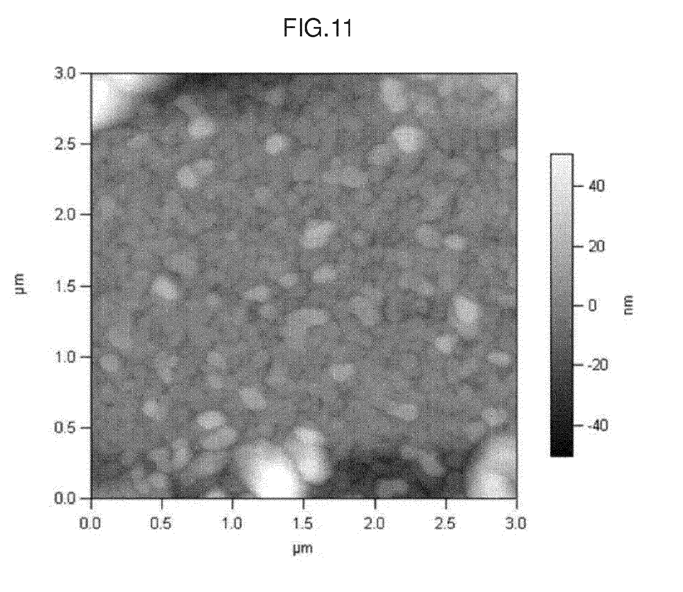

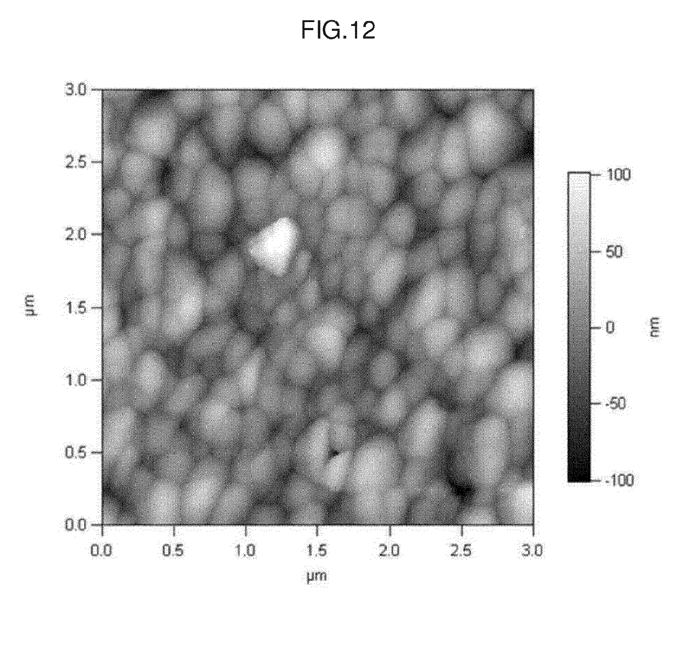

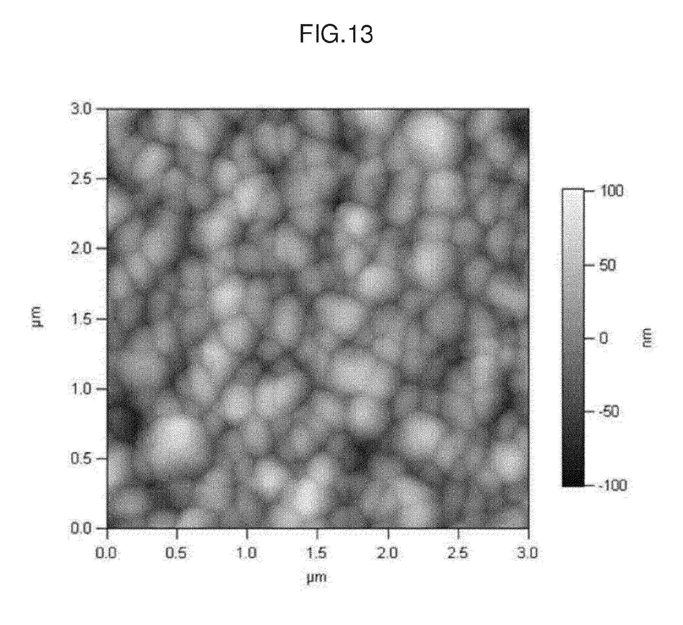

Photographic observations using AFM were carried out on electrode substrate laminated body A (Comparative Example 1), which had not been subjected to a surface treatment, and on surface-treated electrode substrate laminated bodies 1 to 4 (Example 1), as a result of which photographs shown in Figs. 9 to 13 were obtained.

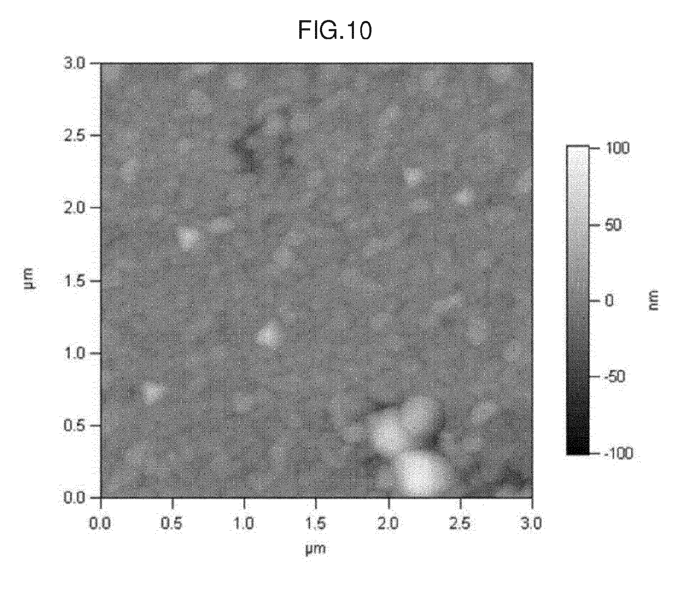

Fig. 9 is an AFM photograph of the electrode substrate surface of electrode substrate laminated body A, that is, the surface of the silver plate, and Figs. 10 to 13 are AFM photographs of the electrode substrate surfaces and the silver chloride layer surfaces of surface-treated electrode substrate laminated bodies 1 to 4, respectively.

In the photograph shown in Fig. 9, no white regions are observed; however, in Figs. 10 to 13, white regions are observed. The white regions are considered to be AgCl, and it is understood that, as the concentration of sodium chloride increases, and as the duration of contact between the silver plate and the chelating solution increases, the area of the white regions increases, and AgCl is formed on the silver plate.

Meanwhile, the vertical axes and the horizontal axes of the AFM photographs shown in Figs. 9 to 13 indicate the sizes of the observation areas, and the unit is [µm] for both axes. A band-shaped scale mark on the right side in the AFT photograph indicates the degree of unevenness on the electrode substrate surface or the silver chloride surface, and numeric values are given according to white to black gradation. The unit of the band-shaped scale mark is [nm].

### (Evaluation of Formation of Self-Assembled Membranes SAM)

### - Evaluation through CV Measurement -

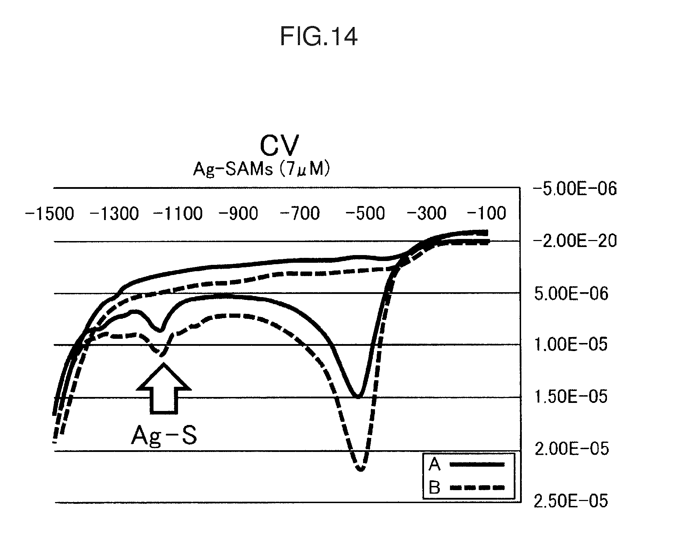

Two SAM laminated bodies 2 produced using SAM-forming solution 2 having a SAM concentration of 7 µmol/L were subjected to cyclic voltammetry measurement [CV measurement] using a POTENTIOSTAT AUTOLAB manufactured by Eco Chemie, as a result of which curves shown in Fig. 14 were obtained. A silver/silver chloride electrode immersed in a saturated potassium chloride solution was used as a reference electrode, platinum was used as a counter electrode, and the electrode chip of the invention was used as a working electrode, and the measurement was carried out in a 0.1 mM potassium hydroxide aqueous solution.

For the curves (cyclic voltammograms) shown in Fig. 14, the vertical axis represents a current [A], and the horizontal axis represents an electric potential [V]. Curve A indicated by a solid line and curve B indicated by a broken line show the CV characteristics of the two electrode chips produced under the same conditions. With respect to each of curve A and curve B, two local minimum peaks are present in the curve at the lower side which is obtained when the electric potential is swept toward the positive potential. Among the peaks, the peak appearing at approximately -1100 [V] indicate the presence of an Ag-S bond in the SAM laminated body.

### - Evaluation through XPS Analysis -

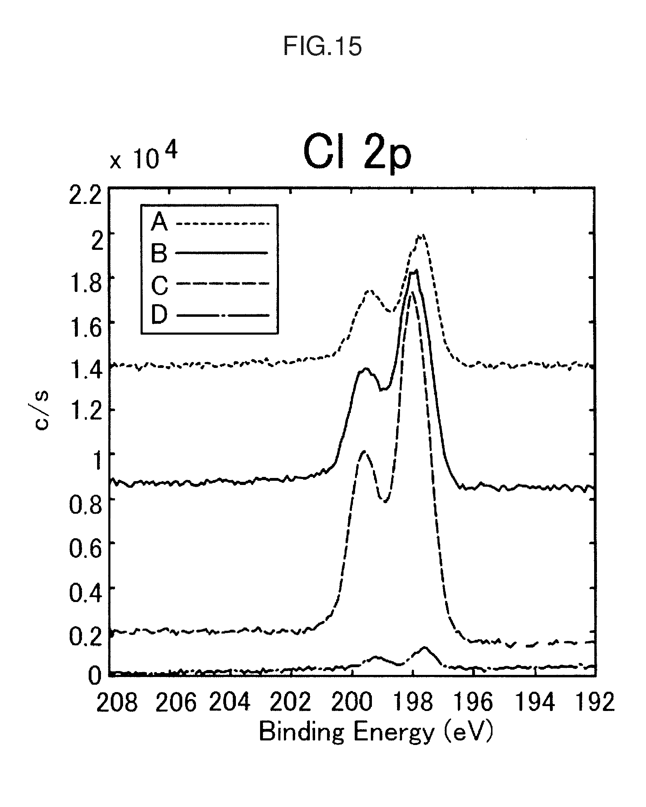

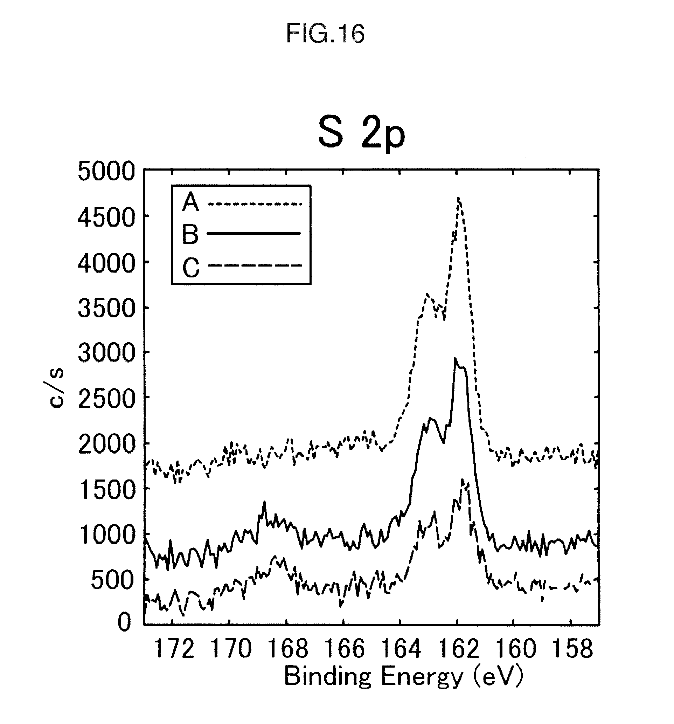

SAM laminated bodies 1, 3 and 5 produced using SAM-forming solutions 1, 3 and 5 having SAM concentrations of 10 µmol/L, 5 µmol/L or 1 µmol/L, and comparative laminated body 201 produced using the comparative SAM-forming solution having a SAM concentration of 0 µmol/L were subjected to X-ray photoelectron spectroscopy (XPS) using a PHI QUANTERA SXM manufactured by Ulvac-Phi, Inc., as a result of which XPS spectra shown in Figs. 15 and 16 were obtained.

The relationships between curves A to D in Figs. 15 and 16 and the respective laminated bodies are noted in Table 5.

**Table 5**

| | SAM concentration | Electrode substrate laminated body | Curve | |
|---|---|---|---|---|
| | µmol/L | Type | Fig. 15 (Cl 2p) | Fig. 16 (S 2p) |
| SAM laminated body 1 | 10 | Surface-treated electrode substrate laminated body 1 | A | A |
| SAM laminated body 3 | 5 | Surface-treated electrode substrate laminated body 1 | B | B |
| SAM laminated body 5 | 1 | Surface-treated electrode substrate laminated body 1 | C | C |
| Comparative laminated body 201 | 0 | Surface-treated electrode substrate laminated body 1 | D | None |

In the XPS spectra shown in Figs. 15 and 16, the horizontal axis indicates the binding energy [eV], and the vertical axis indicates the number of photoelectrons [c/s (counts/sec)].

In all of SAM laminated bodies 1, 3 and 5 and comparative laminated body 201, surface-treated electrode substrate laminated body 1 in which the surface of electrode substrate laminated body A was surface-treated with a chelating solution is used as the electrode substrate laminated body, and, therefore, silver chloride is formed on the surface of surface-treated electrode substrate laminated body 1. As an indication of this, the XPS spectra shown in Fig. 15 show the amounts of chlorine atoms (Cl) included in the silver electrode surfaces of SAM laminated bodies 1, 3 and 5 and comparative laminated body 201, and the height of the peak increases as the amount of chlorine atoms increases.

It is understood from Fig. 15 that, in SAM laminated bodies 1, 3 and 5, the peak representing the amount of chlorine atoms is low in curve A of SAM laminated body 1 having a high SAM concentration, and the peak heighten as the SAM concentration decreases. This is because, as the SAM concentration increases, the number of sulfur atoms that bind to the silver surface increases, and the proportion of the area of the SAM in the substrate surface increases. Since a silver chloride layer is formed through a chemical treatment after the formation of the SAM, a silver chloride layer is formed in the remaining portions in which the SAM has not been formed. Therefore, the SAM concentration dependency as shown in Fig. 15 is observed.

SAM laminated bodies 1, 3 and 5 were obtained by applying SAM-forming solutions having the SAM concentrations noted in Table 5 to surface-treated electrode substrate laminated bodies 1. The SAM-forming solutions contained an alkanethiol (biomolecular probe-immobilizing material) having sulfur atoms. Meanwhile, comparative laminated body 201 was obtained by applying a comparative SAM-forming solution having a SAM concentration of 0 µmol/L, which did not contain an alkanethiol, to surface-treated electrode substrate laminated body 1.

As an indication of this, in the XPS spectra shown in Fig. 16, curves A to C have peaks that indicates the presence of sulfur atoms (S) in SAM laminated bodies 1, 3 and 5, and a curve having a peak indicating the presence of sulfur atoms (S) was not obtained for laminated body 201.

As is evident from Fig. 16, curve A of SAM laminated body 1 having a high SAM concentration has a high peak, and the peak decreases as the SAM concentration decreases, in contrast to Fig. 15. This is because, as the SAM concentration increases, the number of sulfur atoms that bind to the silver surface increases, and the proportion of the area of the SAM in the substrate surface increases.

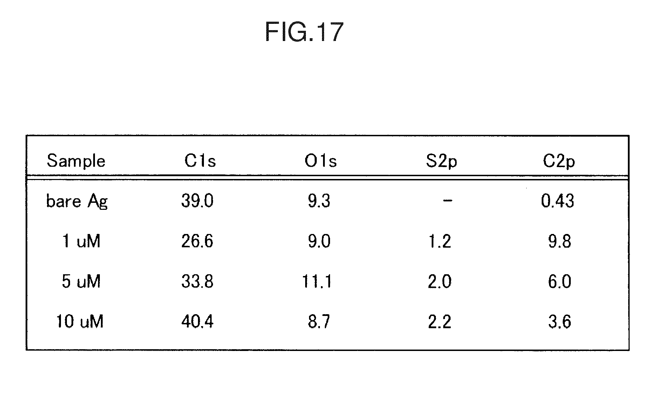

In addition, the table shown in Fig 17 describes the proportions of detected atoms obtained from the XPS spectra shown in Figs. 15 and 16. The units for the respective numeric values are [%]. Carbon atoms (C), chlorine atoms (Cl), oxygen atoms (O) and sulfur atoms (S) were detected through the XPS analysis. It is considered that the carbon atoms are derived from the hydrocarbon chain in the alkanethiol forming the self-assembled membrane SAM and that the sulfur atoms are derived from the thiol in the alkanethiol. The chlorine atoms are considered to be derived from chloride ions in the silver chloride layer. The oxygen atoms are considered to be derived from moisture in air attached to the electrode substrate.

In addition, "1 µM", "5 µM" and "10 µM" in the Sample column in the table shown in Fig. 17 are respectively the concentrations of the SAM-forming solutions at the time of forming the SAM laminated bodies.

Meanwhile, "bare Ag" in the Sample column in the table shown in Fig. 17 indicates laminated body 201 obtained using surface-treated electrode substrate laminated body 1 in which a SAM is not formed and on which a AgCl surface is exposed. In the "bare Ag", the detection of slight existence of carbon atoms is considered to be derived from ethanol in the comparative SAM-forming solution applied to surface-treated electrode substrate laminated body 1.

### (Evaluation of Electrochemical Characteristics of Electrode Materials)

The stability of the surface potential on the electrode substrate surface was evaluated using SAM laminated body 4 (Example) and SAM laminated body 102 (Comparative Example). As described in Table 6, SAM laminated body 4 and SAM laminated body 102 were both produced using SAM-forming solution 4 having a SAM concentration of 3 µmol/L. However, the electrode substrate laminated body, to which SAM-forming solution 4 was to be applied, was subjected to a surface treatment so that AgCl was formed in the case of SAM laminated body 4, whereas, in the case of SAM laminated body 102, the electrode substrate laminated body, to which SAM-forming solution 4 was to be applied, was not subjected to a surface treatment, and the Ag plate was exposed.

**Table 6**

| | Coating liquid | Coating subject (electrode substrate laminated body) | | | | Curve in Fig. 20 |
|---|---|---|---|---|---|---|
| | SAM concentration | Type | Surface treatment | Component of surface | | |
| SAM laminated body 4 | 3 µM | Surface-treated electrode substrate laminated body 1 | Yes | AgCl | Fig. 18 | A |
| Comparative SAM laminated body 102 | 3 µM | Electrode substrate laminated body A | No | Ag | Fig. 19 | B |

The surface potential was measured relative to a silver/silver chloride reference electrode immersed in a saturated potassium chloride solution as a reference, using a 6514 electrometer manufactured by Keithley Instruments, Inc. as an electric potential measuring device, and using sodium chloride solutions having concentrations of 2.5 mM, 25 mM and 250 mM.

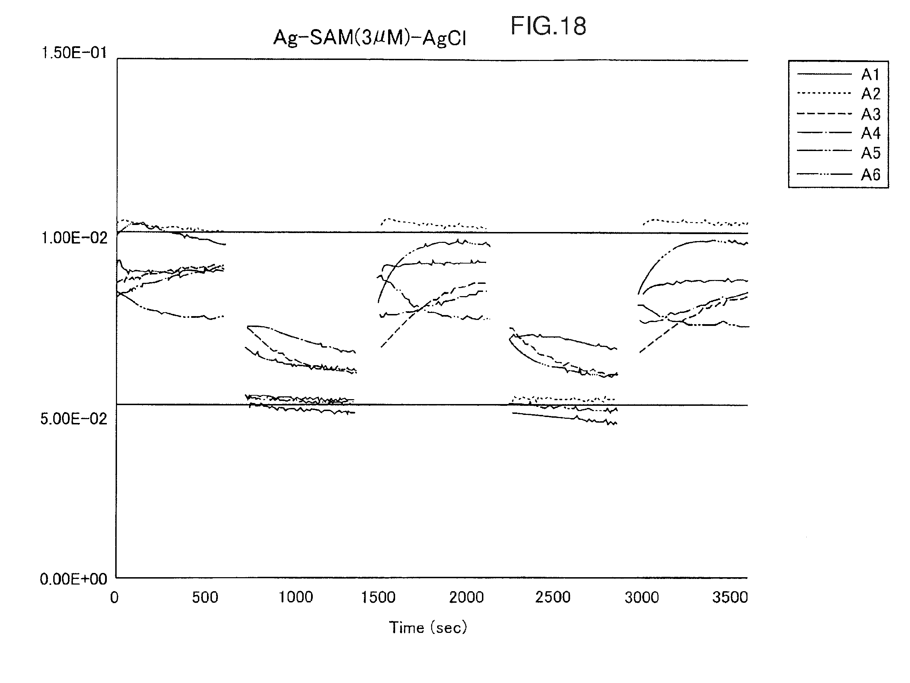

The results are shown in Figs. 18 to 20.

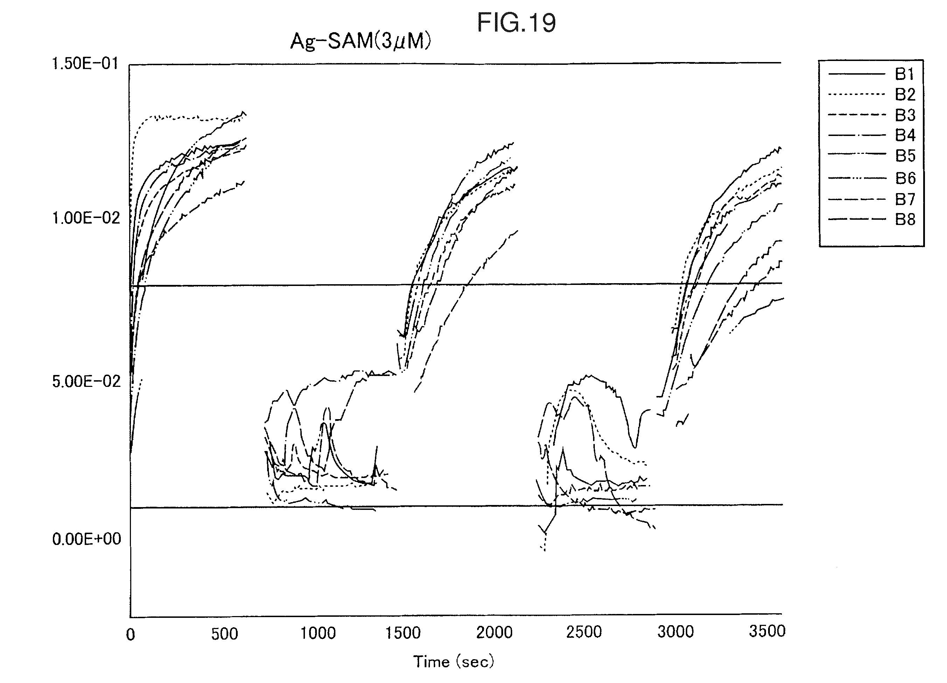

Fig. 18 is a graph illustrating the changes over time (A1 to A6) of the surface potentials on the electrode substrate surfaces of six identical SAM laminated bodies 4 produced using surface-treated electrode substrate laminated body 1 having a silver chloride layer formed on the surface of the electrode substrate. Fig. 19 is a graph illustrating the changes over time (B1 to B8) of the surface potentials on the electrode substrate surfaces of eight identical SAM laminated bodies 102 produced using electrode substrate laminated body A having a silver plate exposed on the surface of the electrode substrate. In both Figs. 18 and 19, the vertical axis represents the surface potential [V], and the horizontal axis represents the elapsed time [seconds]. The surface potentials were measured while alternately using 25 mM sodium chloride and 250 mM sodium chloride as the solution in which the electrode was immersed, starting from 25mM sodium chloride.

As shown in Fig. 18, in SAM laminated body 4 having a silver chloride layer formed on the surface of the electrode substrate, the surface potential became stable 5 seconds to 200 seconds (in many cases, approximately 30 seconds) after the initiation of the measurement of the surface potential. In contrast, in SAM laminated body 102 having a silver plate exposed on the electrode substrate, it took 500 seconds or more for the surface potential to become stable after the change in the concentration of sodium chloride, as is understood from Fig. 19. This is because the formation of a silver chloride layer on the surface of the electrode enables an equilibrium to be rapidly achieved based on the Formula (1) described above after the concentration of chlorine ions in the solution changes, and enables a new equilibrium electric potential to be stabilized. This demonstrates that the formation of a silver chloride layer on the surface of the electrode is effective for improving the accuracy of electric potential measurement. In contrast, in the electrode in which silver is exposed, since there is no dissociation mechanism through which an equilibrium reaction is formed, the surface potential is not stabilized, and potential drift occurs.

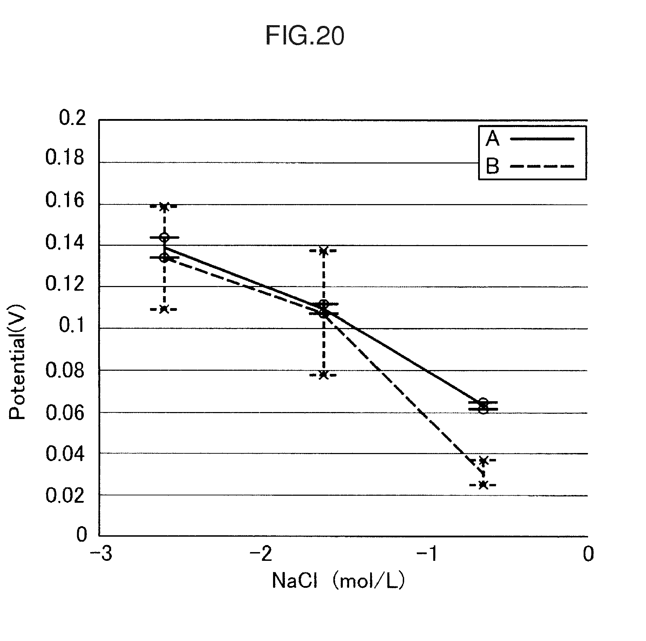

Next, a graph illustrating the variations of the surface potentials of SAM laminated body 4 and SAM laminated body 102 based on the data obtained from Figs. 18 and 19 is shown in Fig. 20. In the graph shown in Fig. 20, the vertical axis represents the surface potential [V] on the surface of the electrode substrate of the SAM laminated body, and the horizontal axis represents the concentration [mol/L] of sodium chloride (NaCl) used in the measurement.

As is understood from Fig. 20, in curve A showing the surface potential of SAM laminated body 4 having a silver chloride layer on the electrode substrate, the length of the vertical bar that represents the variation of the surface potential is small, and the electric potential stability of the surface potential is excellent. The reason therefor is thought to be that silver chlorides in the silver chloride layer formed on the electrode substrate have dissociated and form an equilibrium state in an aqueous solution.

In contrast, in curve B showing the surface potential of SAM laminated body 102 constituted using the electrode substrate in which a silver plate is exposed, the length of the vertical bar that represents the variation of the surface potential is large, indicating that the surface potential is not stable.

In addition, according to Fig. 20, it is understood that the surface potential changes in accordance with the concentration of sodium chloride in the solution in which the electrode is immersed, and, as the concentration of sodium chloride increases, the surface potential decreases and the variation of the surface potential decreases. The Nernst's equation indicates that an electrode electric potential has a negative slope with respect to negative ions (chlorine ions) and is proportional to the logarithm of the ion concentration. From Fig. 20, in an electrode having silver chloride formed on its surface, linearity relative to the logarithm of the concentration of chlorine ions is favorable, a surface potential based on the electrochemical equilibrium expressed by the Nernst's equation is thought to be obtained, and the control of the surface potential is possible. In contrast, the electrode in which silver is exposed on the surface exhibits a non-linear response, and it is thought that the surface potential changes due to other mechanisms such as the physical adsorption of ions.

### (Evaluation of Immobilization of Biomolecular Probe)

A surface of the electrode chip on which silver was exposed was reacted with an alkanethiol that had a carboxyl end and that was dissolved in ethyl alcohol at a concentration of 1 µmol/L (µM), whereby a self-assembled membrane SAM was formed on the silver surface. Thereafter, the electrode chip was immersed in a liquid mixture of a 100 mM 1,3-diaminopropane tetraacetate·iron·ammonium·monohydrate [PDTA·Fe (III)] and 100 mM sodium chloride (NaCl) for 20 seconds, whereby silver chloride was formed in regions on the silver surface in which the SAM was not formed. The electrode chip was immersed in a solution of an oligonucleotide having an amino group at its 5' end, which is a biomolecular probe, whereby an amide bond was formed between an amino group on the surface of the electrode and a carboxyl group of the oligonucleotide, and the oligonucleotide was thus immobilized to the surface of the electrode. Hybridization was carried out by introducing a target DNA into the surface of the electrode, as a result of which the electrode potential changed in the negative direction by approximately 10 mV. This is thought to be caused by the formation of complementary binding between the target DNA having a negative charge and the oligonucleotide on the surface of the electrode. As described above, it was confirmed that a target DNA can be detected using the electrode chip for detecting a biomolecule of the invention.

### [Production of Electrode Chip 2 for Detecting a Biomolecule (Example 2)]

### (Production of Electrode Substrate Laminated Body)

An ITO substrate having a thickness of 100 nm and surface dimensions of 5 mm×5 mm was prepared as an electrode substrate.

A glass substrate having a thickness of 1 mm and the same surface dimensions as those of the electrode substrate was prepared as a substrate for supporting the electrode substrate.

The prepared ITO substrate and the prepared glass plate were adhered, thereby producing electrode substrate laminated body T for an electrode chip 2 for detecting a biomolecule.

### (Formation of Metallic Oxide Layer)

Four electrode substrate laminated bodies T thus produced were prepared, and tantalum oxide (Ta₂O₅) was vapor-deposited on the surfaces of the electrode substrates using electron beams, thereby obtaining metallic oxide layer-containing electrode substrate laminated bodies 5 in which the film thickness of the vapor-deposited film was 20 nm.

### (Formation of Self-Assembled Membrane SAM)

Amino groups were introduced to the surface of metallic oxide layer-containing electrode substrate laminated body 5 by introducing a γ-aminopropyl triethoxysilane solution to the surface of the electrode substrate of metallic oxide layer-containing electrode substrate laminated body 5, thereby obtaining SAM laminated body 6.

### (Immobilization of Biomolecular Probe)

The biomolecular probe was immobilized in the same manner as that in the production of electrode chip 1 for detecting a biomolecule, except that SAM laminated body 6 was used instead of SAM laminated body 1 as the SAM laminated body. In the present example, enzyme urease was used as the biomolecule.

In this way, an electrode chip 2 for detecting a biomolecule of Example 2 was produced. The configuration of SAM laminated body 6 used in the electrode chip 2 for detecting a biomolecule is shown in Table 7.

**Table 7**

| | Configuration of SAM laminated body | | Electrode substrate laminated body T | |
|---|---|---|---|---|
| | Type | SAM component | Type | Component of surface |
| Electrode chip 2 for detecting biomolecule | SAM laminated body 6 | γ-aminopropyl triethoxysilane | Metallic oxide layer-containing electrode substrate laminated body 5 | Ta₂O₅ |

### [Evaluation of Electrode Chip 2 for Detecting a Biomolecule]

### (Evaluation of Formation of Metallic Oxide Layer)

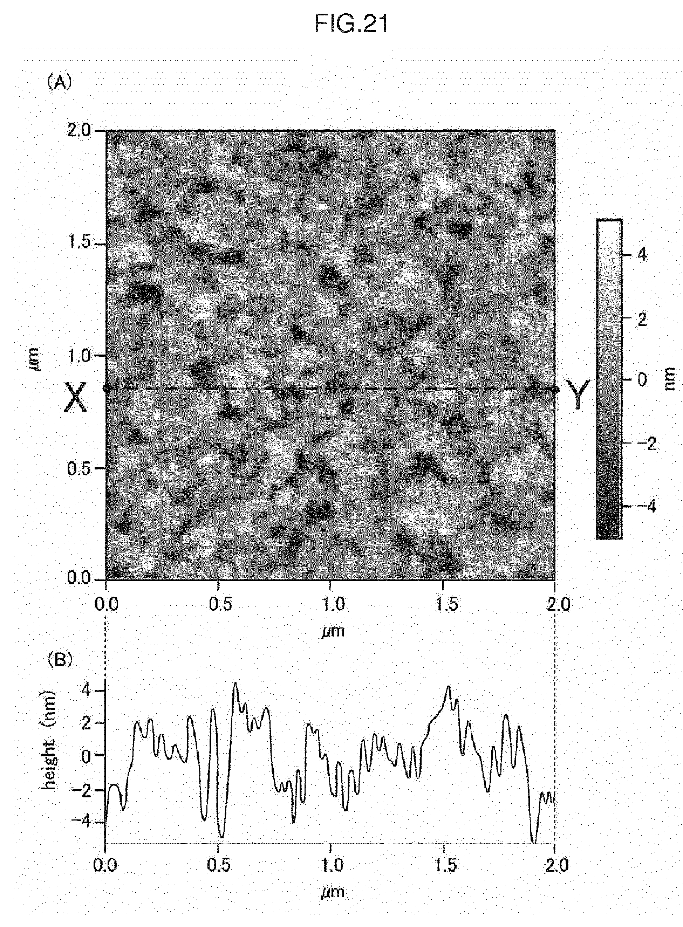

Photographic observation using AFM was carried out on metallic oxide layer-containing electrode substrate laminated body 5, as a result of which photograph (A) shown in Fig. 21 and curve (B) showing the uneven state of the surface of the electrode substrate or the surface of the metallic oxide layer were obtained.

The specifics of the vertical axis and the horizontal axis of the AFM photograph shown in Fig. 21A and the specifics of the band-shaped scale marker located at the right side of the photograph are the same as those in the AFM photographs shown in Figs. 9 to 13. In the graph showing a curve representing the uneven state of the surface of the electrode substrate or the surface of the metallic oxide layer shown in Fig. 21B, the vertical axis represents the size [nm] of surface irregularities, and the horizontal axis represents the same size [µm] of the observation area as that indicated by the horizontal axis of the AFM photograph. In Fig. 21, the horizontal axis of the AFM photograph shown in (A) and the horizontal axis shown in (B) are shown to correspond to each other.

From Fig. 21, it was found that the average roughness R_{RMS} of the surface of the tantalum oxide layer was 1.855 nm, and that a uniform flat film was obtained.

### (Evaluation of Response to pH)

Six aqueous solutions having different pH values, respectively having pH 1.68, pH 4.01, pH 6.86, pH 7.41, pH 9.18 and pH 10.01, were prepared using commercially available buffer solutions. Metallic oxide layer-containing electrode substrate laminated body 5 was immersed in the prepared aqueous solutions having the pH values, and the change over time of the surface potential on the surface of metallic oxide layer-containing electrode substrate laminated body 5 was measured for approximately 100 seconds from immediately after the immersion.

Metallic oxide layer-containing electrode substrate laminated body 5 was subjected three times to a cycle of being sequentially immersed in the aqueous solution having a pH of 1.68, the aqueous solution having a pH of 4.01, the aqueous solution having a pH of 6.86, the aqueous solution having a pH of 7.41, the aqueous solution having a pH of 9.18, and the aqueous solution having a pH of 10.01 in this order. When metallic oxide layer-containing electrode substrate laminated body 5 was removed from an aqueous solution and then immersed in a next aqueous solution, metallic oxide layer-containing electrode substrate laminated body 5 was washed with water and dried before immersed in the next aqueous solution.

In this way, the variations of the surface potential on the surface of the metallic oxide layer when metallic oxide layer-containing electrode substrate laminated body 5 was put under the variety of pH environments were evaluated.

Here, the surface potential measurement was carried out in a state in which metallic oxide layer-containing electrode substrate laminated body 5 was connected to a 6514 electrometer manufactured by Keithley Instruments, Inc., and in which a silver-silver chloride reference electrode was used as a reference.

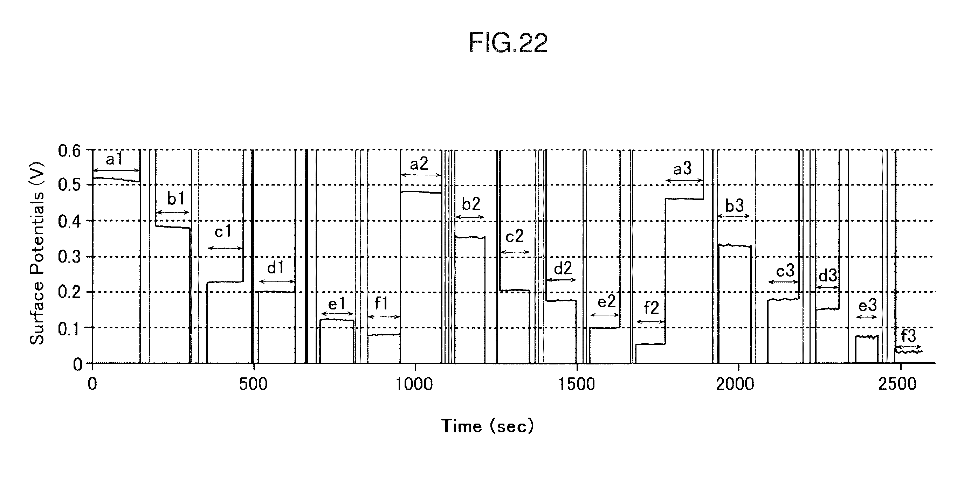

The measurement results are shown in Fig. 22.

In Fig. 22, the vertical axis represents the surface potential [V], and the horizontal axis represents the change in time [seconds].

Here, a1 to a3 written above arrows (↔) indicate the changes in the surface potential in the aqueous solution having a pH of 1.68, b1 to b3 indicate the changes in the surface potential in the aqueous solution having a pH of 4.01, c1 to c3 indicate the changes in the surface potential in the aqueous solution having a pH of 6.86, d1 to d3 indicate the changes in the surface potential in the aqueous solution having a pH of 7.41, e1 to e3 indicate the changes in the surface potential in the aqueous solution having a pH of 9.18, and f1 to f3 indicate the changes in the surface potential in the aqueous solution having a pH of 10.01.

In each of a1 t f1, a2 to f2 and a3 to f3, the surface potential became stable immediately after the initiation of the surface potential measurement, or the change in the surface potential was small. This is thought to be because the metallic oxide on the electrode substrate has dissociated and has turned into an equilibrium state.

### (Evaluation of pH Characteristics)

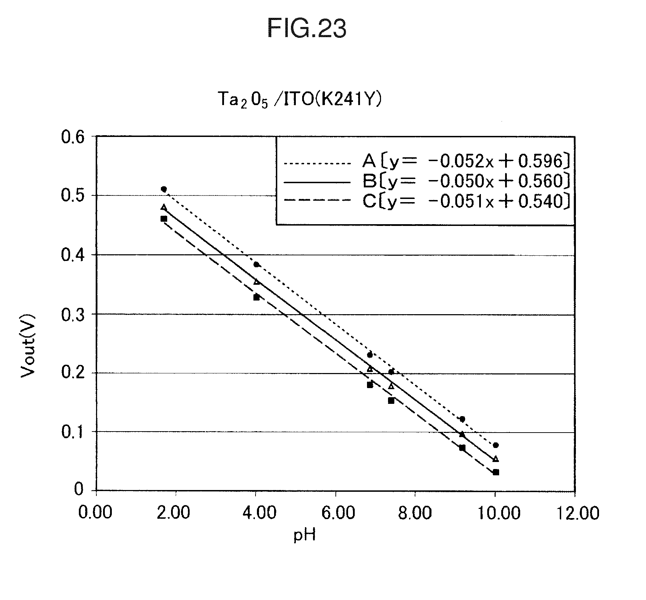

A graph was prepared from the relationships between the pH and the surface potential shown in Fig. 22, as a result of which straight lines shown in Fig. 23 were obtained.

Straight line A in Fig. 23 is a regression line of the surface potentials in a1 to f1 in Fig. 22 plotted relative to pH, straight line B is a regression line of the surface potentials in a2 to f2 in Fig. 22 plotted relative to pH, and the straight line C is a regression line of the surface potentials in a3 to f3 in Fig. 22 plotted relative to pH.

It is understood from Fig. 23 that a favorable linear response is observed in a wide pH range of 1.68 to 10.01. The slope of each of regression lines A to C shown in Fig. 23 is also called slope sensitivity, and is an index used to evaluate performance as an oxidized metallic film material and a pH sensor. The relationship between the surface potential and pH is expressed by the Nernst's equation. According to the Nernst's equation, the slope sensitivity is calculated to be approximately 58 mV/pH at room temperature. Meanwhile, the slopes of the three regression lines shown in Fig. 23 are -0.052 V/pH, -0.050 V/pH and -0.051 V/pH, respectively, which indicates favorable reproducibility and uniformity. These values correspond to -52 mV/pH, -50 mV/pH and -51 mV/pH, respectively, when the unit is converted from volt to mV, and these values are close to the theoretical values obtained using the Nernst's equation. Therefore, it is understood that, on the surface of the oxidized metallic film of the example, the dissociation reaction of formula (2) described above efficiently occurs, and a response close to the theoretically-predicted characteristics can be obtained.

### [Detection of Biomolecule]

Urea was detected using electrode chip 2 for detecting a biomolecule of Example 2 under the following conditions. Urea is an important chemical component in evaluating kidney functions. Urea is decomposed according to a reaction represented by the following formula (3) using the catalytic action of an enzyme urease.

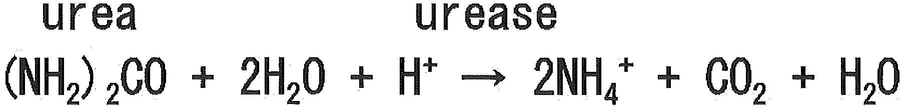

In the reaction shown in formula (3), since a hydrogen ion is consumed, the concentration of hydrogen ions in an aqueous solution changes, that is, pH changes. Therefore, the concentration of urea, which is the measurement target, can be detected by measuring the change in pH. When a 1 mM urea aqueous solution was prepared and introduced to electrode chip 2 for detecting a biomolecule, which is a second example of the invention, the surface potential of the electrode chip changed by approximately 15 mV 1 minute after the introduction. It is thought that the urease immobilized to the surface of the electrode and urea in the solution as the measurement target reacted with each other, and that hydrogen ions were thus consumed according to formula (3), and that pH in the vicinity of the surface of the electrode chip resultantly changed, and that the change could be detected by the metallic oxide electrode.

### <Reference Example 1>

### [Production of Electrode Chip 3 for Detecting a Biomolecule (Biomolecule Detection Electrode Chip Including Hairpin Aptamer Probe) and Detection of Biomolecule Using Electrode Chip 3 for Detecting a Biomolecule]

### (Production of SAM Laminated Body 6)

A gold (Au) plate having a thickness of 90 nm and surface dimensions of 5 mm×5 mm was prepared as a metal electrode substrate. The prepared gold plate and an extended gate FET substrate having the configuration shown in Fig. 24 were disposed one on the other in layers, thereby producing electrode substrate laminated body B.

Next, SAM-forming solution 6 obtained using the following preparation method was applied to the surface of electrode substrate laminated body B, thereby producing SAM laminated body 6. Meanwhile, the total density of SAM in SAM laminated body 6 was electrochemically determined to be 2.3±0.5 nm⁻².

SAM-forming solution 6 was prepared in the same manner as that in the preparation of SAM-forming solution 1 used in Example 1, except that 6-mercapto-1-hexanol (MCH) was used instead of 10-carboxy-1-decanthiol as the biomolecular probe-immobilizing material, as noted in Fig. 8.

**Table 8**

| | Biomolecular probe-immobilizing material | Solvent | SAM concentration |
|---|---|---|---|
| | Type | Type | µmol/L |
| SAM-forming solution 6 | 6-Mercapto-1-hexanol | Ethanol | 10 |

### (Immobilization of Biomolecular Probe)

A probe compound having the 37mer base sequence shown as an example of the structure of the sh-aptamer in Fig. 24 was prepared as a molecule for forming a biomolecular probe. Next, a carboxy group in the probe compound was reacted with a hydroxy group in the self-assembled membrane SAM in SAM laminated body 6 so as to form an ester bond, thereby immobilizing the hairpin aptamer probe to SAM laminated body 6.

In this way, an electrode chip 3 for detecting a biomolecule was produced.

### [Evaluation of Electrode Chip 3 for Detecting a Biomolecule]

### (Measurement of Solid-Liquid Interface Potential of Electrode)

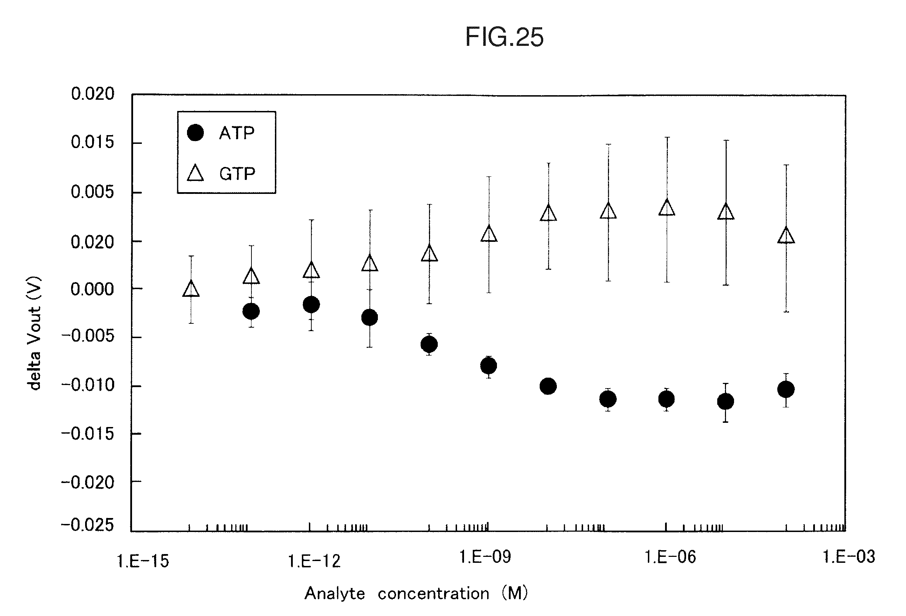

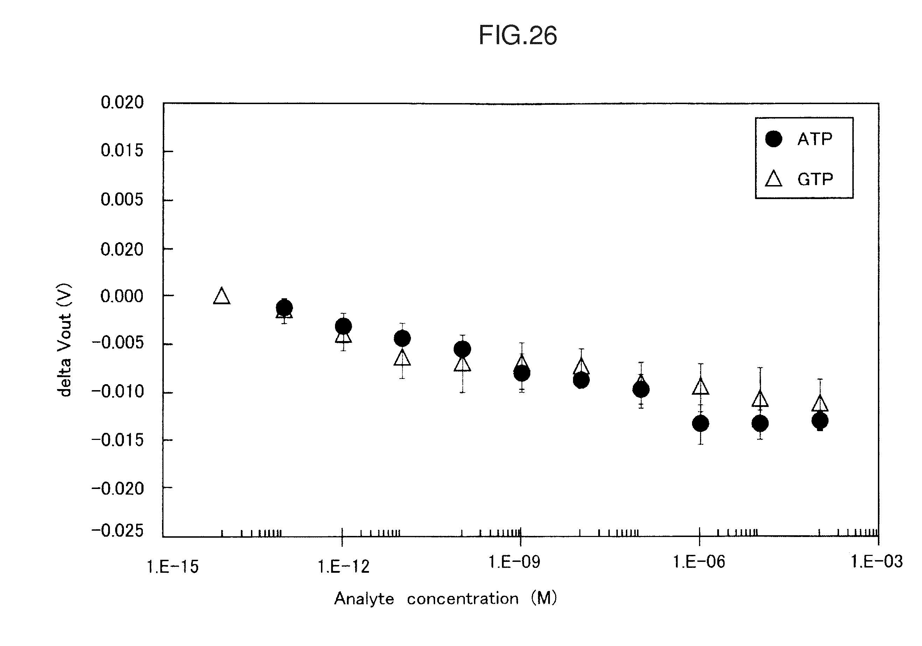

The solid-liquid interface potential of the electrode of the electrode chip for detecting a biomolecule 3 was measured under the following conditions for potential measurements 1 and 2, and the measurement results are shown in Figs. 25 and 26, respectively.

The solid-liquid interface potential of the electrode of electrode chip 3 for detecting a biomolecule was measured by immersing electrode chip 3 for detecting a biomolecule and a Ag/AgCl reference electrode in a DPBS diluted buffer (15 mM Dulbecco's phosphate buffered saline having a pH of 7.4) in a container containing the DPBS diluted buffer, and carrying out real-time detection of the solid-liquid interface potential using FET.

Here, the hairpin aptamer probe in electrode chip 3 for detecting a biomolecule immersed in the DPBS diluted buffer is thought to have a conformation of the sh-aptamer before an ATP aqueous solution is added, because ATP is not present in the DPBS diluted buffer.

### - Electric Potential Measurement 1 -

A DAPI aqueous solution containing DAPI (intercalator) was added to the container in which electrode chip 3 for detecting a biomolecule (sh-aptamer) was immersed in the DPBS diluted buffer. Thereafter, an ATP aqueous solution was added, and the electric potential difference upon the addition of the ATP aqueous solution was measured.

Next, electrode chip 3 for detecting a biomolecule was washed using the DPBS diluted buffer, and then a container in which electrode chip 3 for detecting a biomolecule (sh-aptamer) was immersed in the DPBS diluted buffer was separately prepared, and the DAPI aqueous solution was added to the container. Thereafter, a GTP aqueous solution was added thereto, and the electric potential difference upon the addition of the GTP aqueous solution was measured.

The results are shown in Fig. 25.

### - Electric Potential Measurement 2 -

The electric potential difference upon the addition of the ATP aqueous solution and the electric potential difference upon the addition of the GTP aqueous solution were measured in the same manner as that in electric potential measurement 2, except that the DAPI aqueous solution was not added to the container in which electrode chip 3 for detecting a biomolecule (sh-aptamer) was immersed in the DPBS diluted buffer.

The results are shown in Fig. 26.

### - Electric Potential Measurement 3 -

Electrode chip for detecting a biomolecule in which a In aptamer was fixed to SAM laminated body 6 was produced in the same manner as that in the production of electrode chip 3 for detecting a biomolecule, except that a carboxy group of a probe compound having a structure of the In aptamer shown in Fig. 24 was reacted with a hydroxyl group of the self-assembled membrane SAM in SAM laminated body 6.

The electric potential difference upon the addition of the ATP aqueous solution and the electric potential difference upon the addition of the GTP aqueous solution were measured in the same manner as that in electric potential measurement 1, except that the obtained electrode chip 4 for detecting a biomolecule (In-aptamer) was used instead of electrode chip 3 for detecting a biomolecule (sh-aptamer).

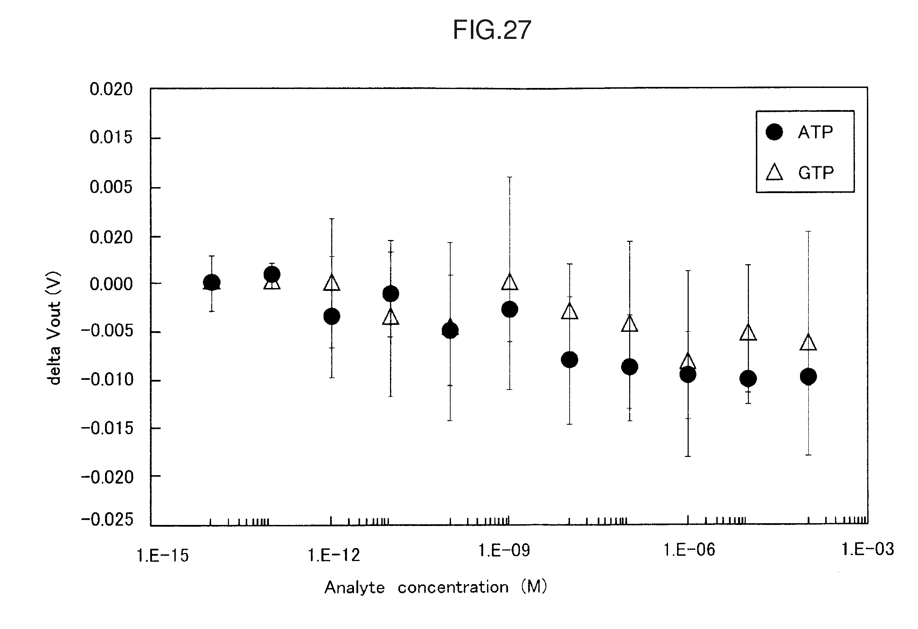

The results are shown in Fig. 27.

### - Results of Electric Potential Measurements 1 to 3 (Figs. 25 to 27) -

In all of Figs. 25 to 27, the horizontal axis represents the concentration [mol/L] ([M]) of ATP or GTP, and the vertical axis represents the detected electric potential difference.

In Fig. 25, in electrode chip 3 including the sh-aptamer for detecting a biomolecule, an electric potential change of approximately -10 mV was observed upon the addition of ATP in the presence of DAPI. In contrast, with non-target guanosine 5'-triphosphate (GTP), no clear signal was obtained in the concentration range of the study.

The sh-aptamer does not have affinity for GTP, and therefore the probe remains folded, and DAPI remains bound to the stem of the sh-aptamer. The negative change observed in the incubation with ATP can be explained by the release of positively charged DAPI from the minor groove in the AT area of the sh-aptamer to the liquid layer.

A maximum of three DAPI molecules (six positive charges) is released per each sh-aptamer. This explanation matches the non-different electric potentials observed with the sh-aptamer free of DAPI (Fig. 26).

Since the linear (In) aptamer has an ATP-binding sequence, the linear aptamer has a function of capturing target ATP. However, an electrode connected to the In aptamer could not detect ATP (Fig. 27).

The reason therefor is thought to be that ATP is electrically neutral in the DPBS diluted buffer having a pH of 7.4, and, therefore, it is thought that meaningful signals are not generated using FET upon the detection of ATP. Therefore, both of the setting of the sh-aptamer and DAPI are necessary in order to generate measurement signals.

In principle, a FET device can convert the intrinsic charge of molecules in an electrical double layer. The length (ξ) of the characteristic Debye screening of a solution can be expressed as a function of ion strength (I) in the form of ξ∼I^{1/2}.

The Debye length in the 15 mM DPBS diluted buffer was calculated to be 2.5 nm. This length corresponds to the intramolecular distance of as short as 7mer molecule in the Debye length at the 5' end of the sh-aptamer, in view of the conversion based on the base length (0.34 nm). Therefore, the FET device is thought to sensitively respond only to a change in the charge of the stem due to the dissociation of DAPI when specific ATP is captured.

In contrast, in a case in which DAPI as an indicator is present, the change in the local ion concentration at the gate solution interface caused by a large-scale change in the structure of the sh-aptamer upon capturing of ATP is insufficient for inducing a change in the electric potential difference. The ion screening effect is a primary reason for the distinctive detection of the structural phase transition of the sh-aptamer in the presence of DAPI.

As shown in Fig. 25, the response of the sensor ranged over a dynamic range of approximately three digits (10⁻⁸ to 10⁻¹¹ M), and was specific to the concentration of ATP. It is understood that the sensor is comparable or superior to most fluorescent assays using electricity and ATP, in terms of sensitivity achieved by employing an extremely simple label-free technique.

### (Photographic Observation Using Epifluorescent Microscope)

In order to identify the structural change in the sh-aptamer on the electrode, photographic (epifluorescent image) observation was carried out using an epifluorescent microscope in the presence of an indicator dye.

TO-PRO-3 was used as the indicator dye.

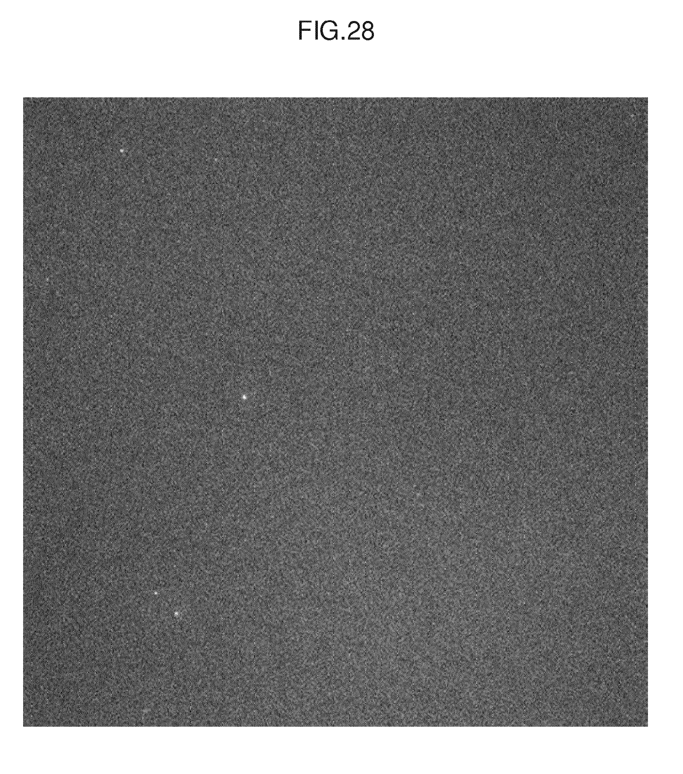

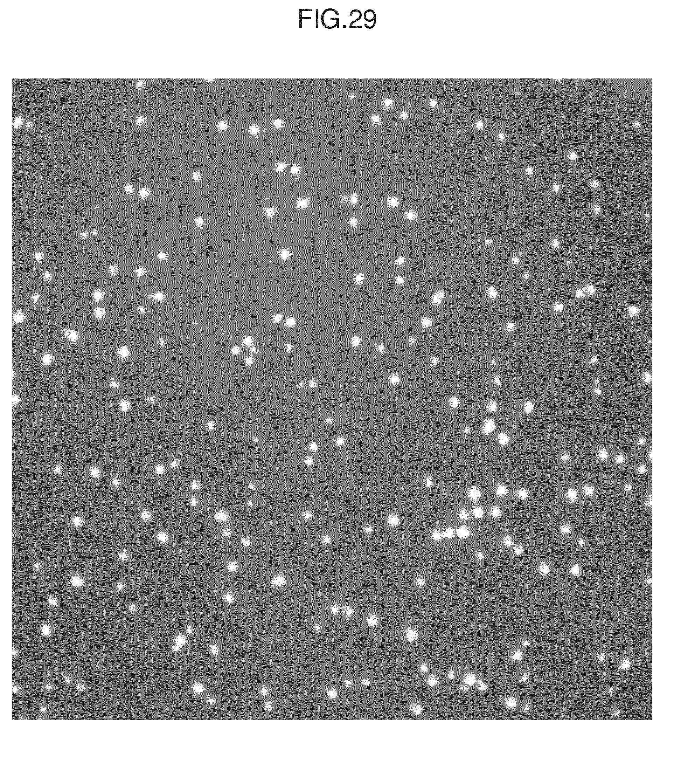

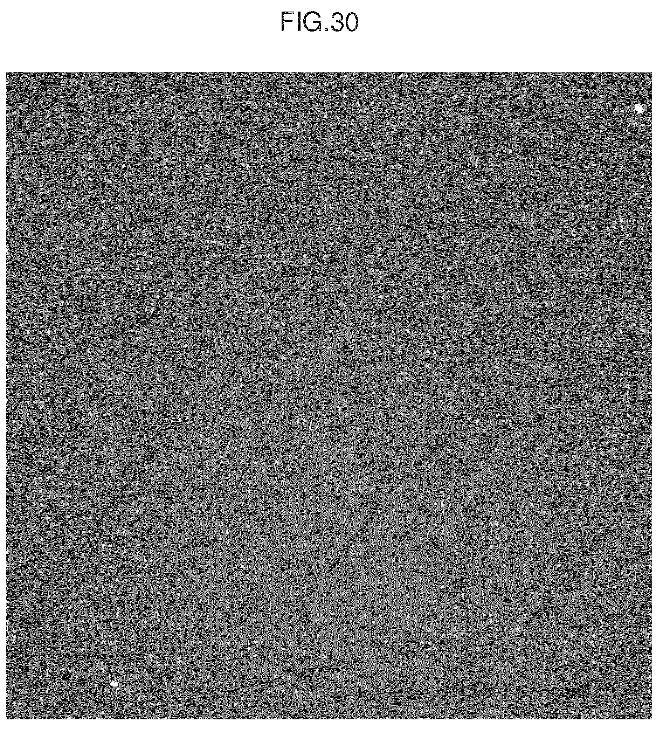

Fig. 28 shows an epifluorescent image of a surface (AgCl surface) of an electrode substrate on which a SAM and a hairpin aptamer probe is not formed, Fig. 29 shows an epifluorescent image before ATP is reacted with electrode chip 3 for detecting a biomolecule (sh-aptamer), and Fig. 30 shows an epifluorescent image after ATP has been reacted with electrode chip 3 for detecting a biomolecule (sh-aptamer).

As shown in Fig. 29, strong fluorescent light emission was observed, and it was found that the hairpin aptamer probe had a conformation of the sh-aptamer having a closed loop. On the other hand, in Fig. 30 that shows a system in the presence of ATP, fluorescent light emission is not observed, and it is understood that the hairpin aptamer probe has a confirmation (i.e., the conformation of the In-aptamer) different from the conformation of the sh-aptamer.

FET is a strong transducer for detecting ions or charged particles as electric potential difference signals using a label-free method. In addition, the configuration of an extended gate structure is a method with a high cost effect and facilitates modifications to sensor chips. However, there was a large problem with respect to highly sensitive detection of weakly-charged or non-charged specimens.

The use of a structured oligonucleotide aptamer probe in a molecule-recognition element in combination with groove binding or an intercalator enables the expansion of the use of FET sensors in a variety of detections of neutral molecules. In the future, with respect to DAPI, improvements such as an improvement of the stability of assays and the use of less-carcinogenic DNA binders can be made. Based on the additional function of this technique, important signals induced by the release of a charged indicator from the electric double layer in the gate solution nano interface is expected to overcome the potential defects of ion screening of specimens charged for FET biosensing.

In the respective methods illustrated above in the invention, detection can be carried out using a sh-aptamer unique to the target based on a combination of an integrated charge of the shield and a large molecular cationic groove binder.

In conclusion, it was found that highly sensitive and specific detection of ATP can be achieved using a label-free method by confirming the release of a cationic target (DAPI) from the sh-aptamer integrated in a FET device.

The large change obtained as an electric potential difference signal is induced by the autogenous denaturation caused by the target and the dissociation of preloaded DAPI from the hairpin stem of the electric double layer due to the formation of a complex between the aptamer and ATP. The concept of the structured aptamer allows a FET biosensor to detect a neutral specimen having a minimum influence based on the length of the Debye screening. The hairpin aptamer combined with the function of a FET is expected to play a role of an ordinary switch for transmitting the recognition of ATP to an electrical signal.

### [Production of Electrode Chip 4 for Detecting a Biomolecule (Example 3)]

### (Production of Electrode Substrate Laminated Body)

Electrode substrate laminated body C having a glass substrate, a titanium film and a silver film disposed one on another in layers in this order was produced in the following manner.

A 100 mmx 100 mm synthetic silica glass substrate having a thickness of 1 mm was prepared as a substrate for supporting an electrode substrate.

Next, the surface of the synthetic silica glass substrate was (1) washed using bias sputtering, and then (2) a titanium (Ti) film was formed by deposition, and (3) a silver (Ag) film was further formed by deposition on the obtained Ti film. The Ti film was formed in order to enhance the adhesion between the synthetic silica glass substrate and the Ag film. The thickness of the Ti film in electrode substrate laminated body C was set to 10 nm, and the thickness of the Ag film was set to 90 nm.

The respective sputtering conditions for the steps (1) to (3) are as follows. A sputtering apparatus "JSPUTTER" was used as the sputtering apparatus.

(1) Bias sputtering: RF150W, 300 sec, ArlO sccm
(2) Formation of the Ti film: DC 300W, 0.1 Pa, 93 sec
(3) Formation of the Ag film: DC 300W, 0.1 Pa, 667 sec

### (Formation of Self-Assembled Membrane SAM)

SAM laminated body 7 was formed on the surface of the electrode substrate by introducing SAM-forming solution 7 containing 10-carboy-1-decanthiol (10-CDT) (Dojindo laboratories) and sulfobetaine 3-undecanethiol (SB) to the surface of the electrode substrate of electrode substrate laminated body C. Here, SAM-forming solution 7 was prepared in the same manner as that in the preparation of SAM-forming solution 1, except that sulfobetaine 3-undecanethiol was further mixed.

### (Formation of Metallic Salt Layer)

A silver chloride layer was formed by applying a chelating solution (chelating solution 1) containing PDTA·Fe (III) (Chelest Chelest PD-FN sample) (PDTA ferric ammonium complex) to the surface of the electrode substrate of SAM laminated body 7 thus produced. In this way, metallic salt layer-including electrode substrate laminated body 6 having a SB-containing SAM and silver chloride on a surface thereof was obtained.

### (Immobilization of Biomolecular Probe)

Next, an oligonucleotide having an amino group at its 5' end, which is a biomolecular probe (DNA probe), was reacted with a carboxy group in the self-assembled membrane SAM so as to form an amide bond, thereby immobilizing the biomolecular probe.

In this way, electrode chip 4 for detecting a biomolecule of Example 3 was produced.

Meanwhile, since the SAM contains hydrophobic 10-carboxy-1-decanthiol and hydrophilic sulfobetaine 3-undecanethiol (SB), electrode chip 4 for detecting a biomolecule has a configuration in which the biomolecular probe is not present at all terminals of the SAM, but the biomolecular probe is present at some of the terminals, and SB is present at other terminals.

Specifically, the molar ratio [DNA probes: SB] of DNA probes to SB is 1:1, which is 0.04 probes/(nm)².

Meanwhile, metallic salt layer-including electrode substrate laminated body 6 is a patterned electrode substrate as shown in Figs. 2 and 3, and metallic salt layer-including electrode substrate laminated body 6 has 10 round electrode substrates (corresponding to electrode substrates 130c in Figs. 2 and 3) and rectangular electrode substrates (corresponding to electrode substrates 130a in Figs. 2 and 3) on a surface thereof. Each of the round electrode substrates has a diameter of 500 µm. The SB-containing SAM formed in the above step and the silver chloride layer are formed on the 10 round electrode substrates.

In addition, the round electrode substrates and the rectangular electrode substrates are coupled using linear electrode substrates 130b as shown in Figs. 2 and 3.

Next, a glass cylinder capable of enclosing all of the 10 round electrode substrates while positioning the rectangular electrode substrates to be outside of the enclosed area was disposed on the surface of metallic salt layer-including electrode substrate laminated body 6, and the surface and the cylinder were adhered to each other so as to prevent water leakage, whereby a cylindrical container of which the bottom surface was a surface having the 10 round electrode substrates was formed. As a result of this, electrode chip 4 for detecting a biomolecule was made to have a configuration in which, when a sample solution is added into the cylindrical container, the sample solution comes into contact with the 10 round electrode substrates, but the sample solution does not come into contact with the rectangular electrode substrates.

### [Evaluation of Electrode Chip for Detecting a Biomolecule 4 (Evaluation of Stability of Surface Potential)]

The electric potential difference measuring apparatus manufactured by Keithley Instruments Inc. was connected to the rectangular electrode substrates of electrode chip 4 for detecting a biomolecule, and the following operations were carried out, thereby evaluating the stability of the surface potential when the biomolecule was adsorbed on the surface of the electrode.

First, the following specimens were prepared
(1) DPBS diluted buffer
   - 15 mM Dulbecco's phosphate buffered saline having a pH of 7.4
(2) Control specimen (Control)
   - PCR buffer (a liquid mixture of dNTP and Taq DNA polymerase)
(3) Target specimen
   - a solution obtained by 1000-fold dilution of a PCR product of micro RNA-143

As described above, the control specimen, which is the specimen (2), is a PCR buffer, and contains dNTP (N=A, G, C or T) including four substrates of A, G, C and T and Taq DNA polymerase, which is an enzyme.

The target specimen, which is the specimen (3), is a liquid obtained by 1000-fold dilution of a PCT product containing micro RNA-143 that was amplified by adding micro RNA-143 to the PCR buffer and carrying out thermal cycle 30 times.

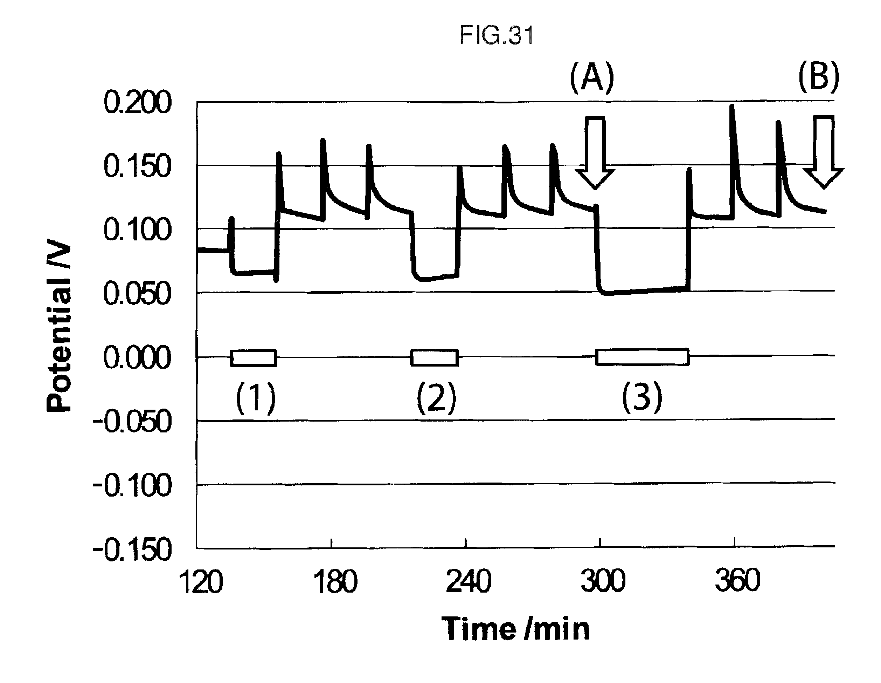

Droplets of the respective specimens (1), (2) and (3) were dropped onto the round electrode substrates in the cylindrical container of electrode chip 4 for detecting a biomolecule at the time intervals shown in Fig. 31. Specifically, droplets of the specimen (1) were dropped three times in period (1) in Fig. 31, droplets of the specimen (2) were dropped three times in period (2) in Fig. 31, and droplets of the specimen (3) were dropped three times in period (3) in Fig. 31, respectively, thereby brining the respective specimens into contact with the electrode substrates.

In addition, the surface potentials on the respective electrode substrates were measured at time points (A) and (B) in Fig. 31. The surface potential at time point (A) was measured after droplets of the specimen (2) (control specimen) were dropped onto the electrode substrates and the electrodes were washed with the buffer. In addition, the surface potential at time point (B) was measured after droplets of the specimen (3) (target specimen) were dropped onto the electrode substrates and then the electrodes were washed with the buffer.

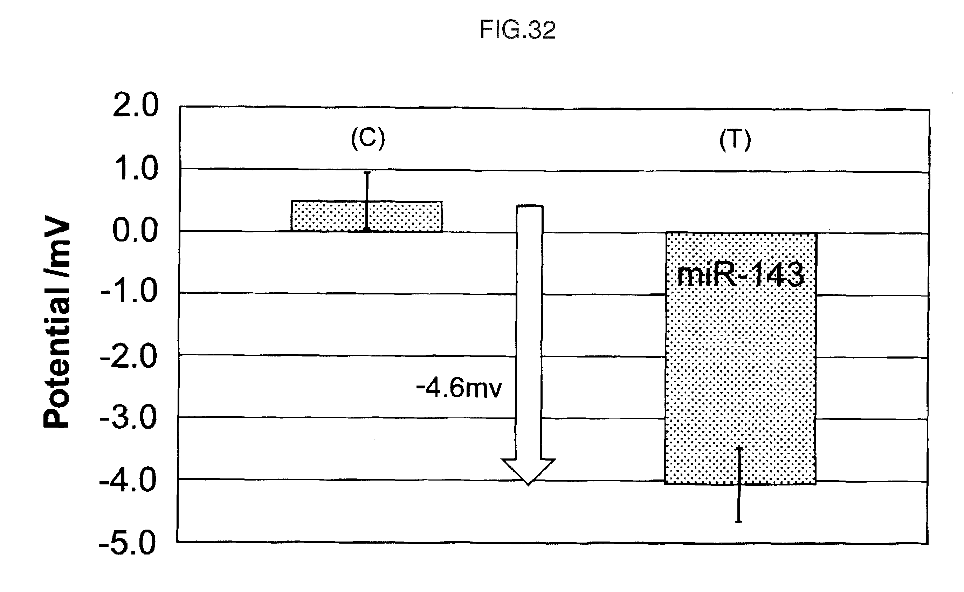

The results are shown in Figs. 31 and 32.

Fig. 31 is a graph showing the change in the surface potential over time in the evaluation of the stability of the surface potential of electrode chip 4 for detecting a biomolecule.

As shown in Fig. 31, since the surface potential stabilized immediately after the addition of the respective specimens (1), (2) and (3), and the baselines hardly changed, it is understood that stable measurement of the surface potential difference can be carried out by using the electrode substrate of electrode chip 4 for detecting a biomolecule.

Meanwhile, since electrode chip 4 for detecting a biomolecule had 10 round electrode substrates capable of detecting the biomolecule, the surface potential due to the adsorption of the biomolecule was measured for each of the 10 electrode substrates. Although Fig. 31 shows the data for one of the electrode substrates, the same tendency was observed also in the other nine electrode substrates.

In addition, the data shown in Fig. 31 and the data obtained from the other nine electrode substrates were summarized in Fig. 32.

Fig. 32 is a bar graph illustrating the average of the surface potentials measured at time points (A) and (B) in Fig. 31. At time point (A) in Fig. 31, the surface potential of the control specimen (i.e., the PCR buffer) was measured, and, at time point (B) in Fig. 31, the surface potential of the target specimen was measured.

In Fig. 32, the bar graph (C) shown on the left side shows the surface potential when the control specimen (Control) was brought into contact with the electrode substrate, and the bar graph (T) shown on the right side shows the surface potential when the target specimen including the target was brought into contact with the electrode substrate.

Contact between the target specimen and the electrode substrate increased the surface potential, compared with a case in which the control specimen that did not include the target was brought into contact with the electrode substrate. This is thought to be because the biomolecule that is the target was adsorbed on the electrode substrate of electrode chip 4 for detecting a biomolecule, and hybridization occurred.

In addition, error bars that indicate the measurement variations are also shown in the bar graphs in Fig. 32. The sizes of the error bars shown in (C) and (T) are both approximately 1 mV, indicating that the variations are small. The small error bars indicate that the surface potential is stable.

The disclosure of Japanese Patent Application No. 2011-094452 is incorporated herein by reference in its entirety.

All publications, patent applications, and technical standards mentioned in this specification are herein incorporated by reference to the same extent as if each individual publication, patent application, or technical standard was specifically and individually indicated to be incorporated by reference.

### Explanation of References

- 10:: substrate
- 12:: silicon substrate
- 14d:: drain
- 14s:: source
- 15:: extraction electrode
- 16:: gate insulation film
- 17:: gate electrode
- 18:: floating electrode
- 20:: intermediate layer
- 30:: electrode
- 32:: electrode substrate
- 34:: inorganic layer (at least one of a metallic salt or a metallic oxide)
- 36:: biomolecular probe-fixing layer
- 38:: biomolecular probe
- 100:: electrode chip for detecting a biomolecule
- 110:: glass substrate
- 130:: electrode substrate
- 130a:: rectangular electrode substrate
- 130b:: linear electrode substrate
- 130c:: round electrode substrate
- 200:: laminated body
- 202:: laminated body
- 333a:: electrode substrate
- 333b:: electrode substrate
- 334a:: part of metallic salt
- 334b:: part of metallic salt
- 336a:: biomolecular probe-immobilizing material
- 336b:: biomolecular probe-immobilizing material
- 338:: biomolecular probe
- 362:: reference electrode
- 364a:: computation amplifier
- 364b:: computation amplifier
- 366:: computation amplifier
- 368:: difference-amplifying output
- 370:: biomolecule aqueous solution
- 432:: electrode substrate
- 437:: oligonucleotide probe
- 440:: target DNA
- 440a:: target base sequence

## Claims

1. An electrode chip for detecting a biomolecule, comprising:
a substrate; and
an electrode that comprises an electrode substrate, at least one of a metallic salt or a metallic oxide provided on an outermost surface on an opposite side of the electrode substrate from a side provided with the substrate, and a biomolecular probe-immobilizing material provided on the outermost surface, wherein a biomolecular probe is immobilized to the biomolecular probe-immobilizing material.

2. The electrode chip for detecting a biomolecule according to Claim 1, wherein the metallic salt is a metallic chloride.

3. The electrode chip for detecting a biomolecule according to Claim 1, wherein a metal included in the metallic salt is silver.

4. The electrode chip for detecting a biomolecule according to Claim 1, wherein a metal included in the metallic oxide is tantalum.

5. The electrode chip for detecting a biomolecule according to Claim 1, wherein the biomolecular probe is a nucleic acid, a polynucleotide, a synthetic oligonucleotide, an antibody or an antigen.

6. A method for detecting a biomolecule, comprising:
an aqueous solution contact step of bringing the electrode chip for detecting a biomolecule according to Claim 1 into contact with an aqueous solution containing at least one kind of biomolecule; and
a detection step of detecting a change in a solid-liquid interface potential of the electrode between the electrode and the aqueous solution.

7. The method for detecting a biomolecule according to Claim 6, wherein the aqueous solution contact step is a step of forming a complementary complex of the biomolecular probe and a nucleic acid that is the biomolecule in the aqueous solution, using a single-strand nucleic acid as the biomolecular probe, or a step of forming an antigen-antibody reaction.
